# EUROPEAN PATENT APPLICATION

(11) **EP 4 790 483 A1**
(43) Date of publication of application: **12.08.2026**
(21) Application number: 24874399.9
(22) Date of filing: 28.08.2024
(51) Int. Cl.: G03B 17/14, G02B 7/08, G03B 5/00, H04N 23/55, H04N 23/69, H04N 23/663

(54) **INTERCHANGEABLE LENS AND CAMERA BODY**

(30) Priority: 06.10.2023 JP 2023174223
(71) Applicant: NIKON CORPORATION, Tokyo 140-8601 (JP)
(72) Inventor: GODA, Yokichi, Tokyo 140-8601 (JP); KANEKO, Masaki, Tokyo 140-8601 (JP); KAWAI, Akihiko, Tokyo 140-8601 (JP); OTA, Hidefumi, Tokyo 140-8601 (JP); HAGIWARA, Kosuke, Tokyo 140-8601 (JP)
(74) Representative: Hoffmann Eitle
(86) International application number: PCT/JP2024/030759
(87) International publication number: WO 2025/074785

(57) **Abstract**

An interchangeable lens mountable on a camera body includes a variable magnification optical system capable of varying magnification, an operation member configured to receive an operation for instructing varying the magnification of the variable magnification optical system from a user, a detection unit configured to detect the operation received by the operation member, a transmission unit configured to transmit information indicating the operation detected by the detection unit to the camera body, a control unit configured to perform in-lens control for controlling varying the magnification of the variable magnification optical system based on the information indicating the operation detected by the detection unit, and a reception unit configured to receive a signal indicating executability of the in-lens control from the camera body.

## Description

### [Technical Field]

The present invention relates to an interchangeable lens and a camera body.

### [Background Art]

There has been known an accessory that is attachable to and detachable from a camera body (Patent Literature 1).

### [Citation List]

### [Patent Literature]

Patent Literature 1: Japanese Patent Application Publication No. 2004-117380

### [Summary of Invention]

According to a first aspect, an interchangeable lens is an interchangeable lens mountable on a camera body includes a variable magnification optical system capable of varying magnification, an operation member configured to receive an operation for instructing varying the magnification of the variable magnification optical system from a user, a detection unit configured to detect the operation received by the operation member, a transmission unit configured to transmit information indicating the operation detected by the detection unit to the camera body, a control unit configured to perform in-lens control for controlling varying the magnification of the variable magnification optical system based on the information indicating the operation detected by the detection unit, and a reception unit configured to receive a signal indicating executability of the in-lens control from the camera body.

According to a second aspect, a camera body is a camera body mountable on an interchangeable lens having a variable magnification optical system. The camera body includes a reception unit configured to receive an operation signal indicating an operation on an operation member included in the interchangeable lens, and a transmission unit configured to transmit information indicating whether or not in-lens control in which a first control unit included in the interchangeable lens controls the variable magnification optical system based on the operation of the operation member included in the interchangeable lens is possible.

The configuration of the embodiments described later may be appropriately improved, and at least a part thereof may be replaced with another configuration. Furthermore, the constituent elements whose arrangement is not particularly limited are not limited to the arrangement disclosed in the embodiments, and can be arranged at positions where the functions thereof can be achieved.

### [Brief Description of Drawings]

[FIG. 1] FIG. 1 is a diagram illustrating an example of a configuration of a camera system according to an embodiment.
[FIG. 2] FIG. 2 is a circuit diagram schematically illustrating electrical connection between a camera body and an interchangeable lens.
[FIG. 3] FIG. 3(A) is an example of a timing chart illustrating the timing of command data communication, and FIG. 3(B) is an example of a timing chart illustrating the timing of hotline communication.
[FIG. 4] FIGs. 4(A) and 4(B) are conceptual diagrams for describing an extend type and a mixed type, respectively.
[FIG. 5] FIGs. 5(A) to 5(D) are diagrams for describing an outline of high resolution zoom.
[FIG. 6] FIG. 6 is a flowchart illustrating an example of a processing executed by a body-side control unit.
[FIG. 7] FIG. 7 is a flowchart (part 1) illustrating an example of an extended type cooperative processing.
[FIG. 8] FIG. 8 is a flowchart (part 2) illustrating an example of the extended type cooperative processing.
[FIG. 9] FIG. 9 is a flowchart (part 3) illustrating an example of the extended type cooperative processing.
[FIG. 10] FIG. 10 is a flowchart illustrating an example of a mixed type cooperative processing.
[FIG. 11] FIG. 11 is a flowchart illustrating an example of a normal processing.
[FIG. 12] FIG. 12 is a flowchart (part 1) illustrating an example of a processing executed by a lens-side control unit.
[FIG. 13] FIG. 13 is a flowchart (part 2) illustrating an example of the processing executed by the lens-side control unit.
[FIG. 14] FIG. 14 is a diagram for describing a drive speed of the zoom lens with respect to a depression amount of the zoom lever and setting of the zoom speed set in the camera body.
[FIG. 15] FIGs. 15(A) and 15(B) are diagrams for describing changes in an optical zoom position and an electronic zoom position in the mixed type.
[FIG. 16] FIG. 16(A) is a diagram illustrating states of an optical zoom and an electronic zoom before a first operation is input, FIG. 16(B) is a diagram illustrating an image displayed on a display unit before the first operation is input, FIG. 16(C) is a diagram illustrating states of the optical zoom and the electronic zoom after the first operation is input, and FIG. 16(D) is a diagram illustrating an image displayed on the display unit after the first operation is input.
[FIG. 17] FIGs. 17(A) and 17(B) are diagrams illustrating a modification of the mixed type, and FIG. 17(C) is a diagram illustrating an example of a relationship between an operation amount of a body-side operation unit or a lens-side operation unit and an electronic zoom position.

### [Description of Embodiments]

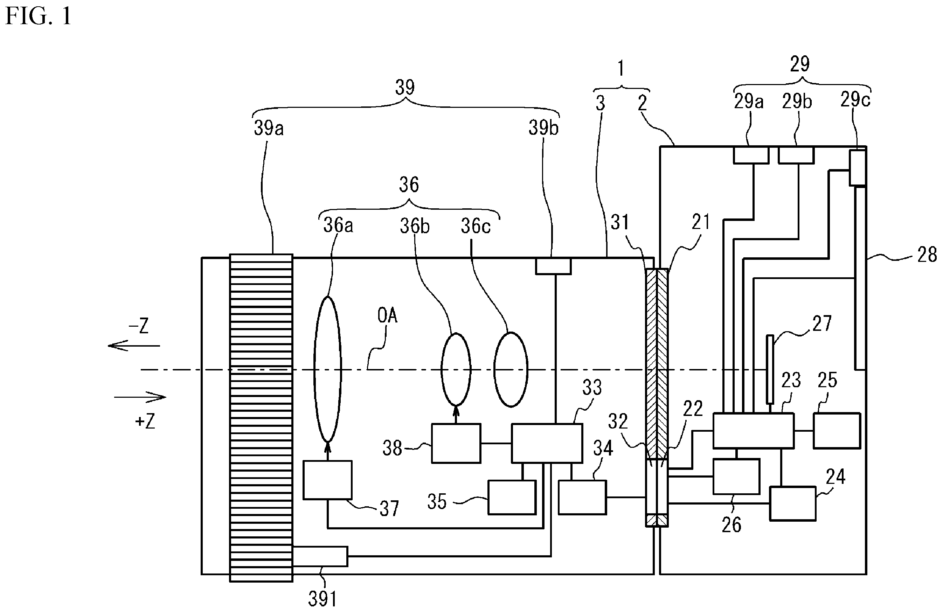

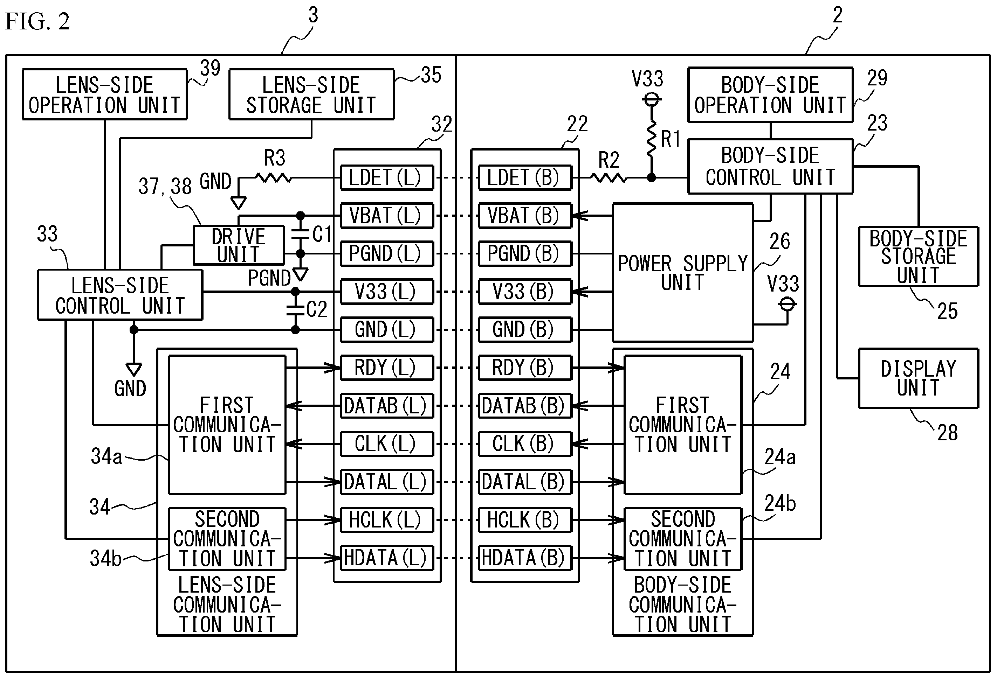

Hereinafter, a camera system 1 according to an embodiment will be described with reference to the drawings. FIG. 1 is a diagram illustrating an outline of a configuration of the camera system 1. FIG. 2 is a circuit diagram schematically illustrating electrical connection between a camera body 2 and an interchangeable lens 3.

As illustrated in FIG. 1, the camera system 1 includes the camera body 2 and the interchangeable lens 3 that is attachable to and detachable from the camera body 2. The interchangeable lens 3 is an example of an accessory. The camera system 1 can capture not only still images but also moving images.

### (Camera Body 2)

The camera body 2 includes a body-side mount 21, a body-side terminal holding unit 22, a body-side control unit 23, a body-side communication unit 24, a body-side storage unit 25, a power supply unit 26, an imaging element 27, a display unit 28, a body-side operation unit 29, and the like.

As illustrated in FIG. 2, the body-side communication unit 24 includes a body-side first communication unit 24a and a body-side second communication unit 24b. The body-side first communication unit 24a performs command-data communication, which is bidirectional communication described later, with the interchangeable lens 3, and the body-side second communication unit 24b performs hotline communication, which is unidirectional communication described later, with the interchangeable lens 3. The body-side first communication unit 24a and the body-side second communication unit 24b are connected to a body-side terminal group (described later) provided in the body-side terminal holding unit 22 and the body-side control unit 23.

The body-side storage unit 25 is a nonvolatile storage medium. The body-side storage unit 25 is connected to the body-side control unit 23. The body-side storage unit 25 stores in advance a predetermined control program and the like to be executed by the body-side control unit 23. The body-side control unit 23 controls the camera body 2 by reading a control program from the body-side storage unit 25 and executing the program. The body-side storage unit 25 stores various types of setting information for the camera system 1.

The power supply unit 26 has a power source and supplies a power to the inside of the camera body 2, and the interchangeable lens 3. The power supply unit 26 is connected to a body-side terminal group (described later) provided in the body-side terminal holding unit 22 and the body-side control unit 23.

The imaging element 27 is a solid-state imaging device such as a CCD or a CMOS, and includes a plurality of pixels that receive light and output signals. The imaging element 27 is connected to the body-side control unit 23, images an object, and outputs an imaging signal to the body-side control unit 23.

The body-side control unit 23 is formed by a microcomputer, a peripheral circuit thereof, and the like. The body-side control unit 23 generates image information based on an imaging signal output from at least a partial region of the imaging surface of the imaging element 27, and causes the display unit 28 to display an image based on the image information. The body-side control unit 23 also performs electronic zoom control (electronic variable magnification control) to change the size of the partial region and change the range of the image displayed on the display unit 28. The body-side control unit 23 performs optical zoom control (optical variable magnification control) for controlling varying a magnification of an imaging optical system 36 of the interchangeable lens 3 according to the setting of the camera body 2. Details of the processing executed by the body-side control unit 23 will be described later. The body-side control unit 23 also has functions other than the above-described functions, but a detailed description thereof will be omitted.

The display unit 28 is a display installed on, for example, the back surface of the camera body 2, and displays various settings for the camera system 1, a through image, and the like. The display unit 28 may be an electronic viewfinder.

The body-side operation unit 29 includes various operation members such as a release button 29a, a zoom lever 29b, a zoom button 29c, a dial (not illustrated), and a power button (not illustrated), and receives input of various instructions to the camera system 1. In a case where the camera body 2 includes a touch panel, the body-side operation unit 29 may include the touch panel.

As illustrated in FIG. 2, the body-side terminal holding unit 22 includes an LDET (B) terminal, a VBAT (B) terminal, a PGND (B) terminal, a V33 (B) terminal, a GND (B) terminal, an RDY (B) terminal, a DATAB (B) terminal, a CLK (B) terminal, a DATAL (B) terminal, an HCLK (B) terminal, and an HDATA (B) terminal. These eleven body-side terminals in total are collectively referred to as a body-side terminal group.

The LDET (B) terminal is a terminal used for detecting attachment/detachment of the interchangeable lens 3. The LDET (B) terminal is connected to the body-side control unit 23 via a resistor R2. A power source V33 supplied from the power supply unit 26 via a resistor R1 is connected between the resistor R2 and the body-side control unit 23, and the LDET (B) terminal is pulled up.

The VBAT (B) terminal, the PGND (B) terminal, the V33 (B) terminal, and the GND (B) terminal are terminals of a power source system connected to the power supply unit 26. In FIG. 2, the directions of the supplied power are indicated by arrows. The VBAT (B) terminal is a terminal used for supplying a power to the interchangeable lens 3. A first drive unit 37 and a second drive unit 38 of the interchangeable lens 3 described later are driven by the power supplied via the VBAT (B) terminal. In FIG. 2, the first drive unit 37 and the second drive unit 38 are collectively illustrated as a drive unit. The first drive unit 37 and the second drive unit 38 require a higher voltage and a higher current than the lens-side control unit 33 to operate, and the voltage applied to the VBAT (B) terminals by the power supply unit 26 is approximately 10V at the maximum. The PGND (B) terminal is a ground terminal corresponding to the VBAT (B) terminal.

The V33 (B) terminal is a terminal used for supplying the power to the interchangeable lens 3. The lens-side control unit 33 is operated by the power supplied from the power supply unit 26 via the V33 (B) terminal. Each unit such as the lens-side control unit 33 operates with a smaller voltage and a smaller current than the first drive unit 37 and the second drive unit 38. The voltage applied to the V33 (B) terminal by the power supply unit 26 is about 3. 3V at maximum. The GND (B) terminal is a ground terminal corresponding to the V33 (B) terminal.

The RDY (B), DATAB (B), CLK (B), and DATAL (B) terminals are connected to the body-side first communication unit 24a and used for command-data communication described later. Further, the HCLK (B) and HDATA (B) terminals are connected to the body-side second communication unit 24b and used for hotline communication. In FIG. 2, the flow of signals is indicated by arrows.

The potential of the RDY (B) terminal indicates whether or not the interchangeable lens 3 is capable of performing command data communication. The DATAB (B) terminal is a terminal from which a data signal is output to the interchangeable lens 3. The CLK (B) terminal is a terminal from which a clock signal is output to the interchangeable lens 3. The DATAL (B) terminal is a terminal to which a data signal from the interchangeable lens 3 is input.

The HCLK (B) terminal is a terminal to which a clock signal from the interchangeable lens 3 is input. The HDATA (B) terminal is a terminal to which a data signal from the interchangeable lens 3 is input.

### (Interchangeable Lens 3)

Referring back to FIG. 1, the interchangeable lens 3 includes a lens-side mount 31, a lens-side terminal holding unit 32, a lens-side control unit 33, a lens-side communication unit 34, a lens-side storage unit 35, the imaging optical system 36, the first drive unit 37, the second drive unit 38, a lens-side operation unit 39, and the like.

The lens-side control unit 33 is formed by a microcomputer, peripheral circuits thereof, and the like. As illustrated in FIG. 2, the lens-side communication unit 34 includes a lens-side first communication unit 34a and a lens-side second communication unit 34b. The lens-side first communication unit 34a performs command-data communication described later with the camera body 2, and the lens-side second communication unit 34b performs hotline communication described later with the camera body 2. The lens-side first communication unit 34a and the lens-side second communication unit 34b are connected to a lens-side terminal group (described later) provided in the lens-side terminal holding unit 32, and the lens-side control unit 33.

The lens-side storage unit 35 is a nonvolatile storage medium. The lens-side storage unit 35 is connected to the lens-side control unit 33. The lens-side storage unit 35 stores in advance a predetermined control program and the like executed by the lens-side control unit 33. The lens-side control unit 33 reads the control program from the lens-side storage unit 35 and executes the program to control the interchangeable lens 3.

The imaging optical system 36 forms a subject image on the imaging surface of the imaging element 27. An optical axis OA of the imaging optical system 36 substantially coincides with the center positions of the lens-side mount 31 and the body-side mount 21 described later. The imaging optical system 36 in FIG. 1 schematically includes a zoom lens 36a, a focus lens 36b, and a lens 36c. The zoom lens 36a is a lens that changes a focal length (an imaging angle of view). The focus lens 36b is a lens that adjusts an imaging position of a subject image.

The first drive unit 37 is connected to the lens-side control unit 33 and includes an actuator (not illustrated) and the like. The first drive unit 37 drives the zoom lens 36a in an optical axis OA direction (+Z direction, -Z direction) by the actuator and the like. That is, the interchangeable lens 3 according to the present embodiment is a power zoom lens.

The second drive unit 38 is connected to the lens-side control unit 33 and includes an actuator (not illustrated) and the like. The second drive unit 38 drives the focus lens 36b in the optical axis OA direction (+Z direction, -Z direction) by the actuator and the like. In FIG. 1, each of the zoom lens 36a, the focus lens 36b, and the lens 36c is illustrated as one lens, but may be a lens group including a plurality of lenses.

The lens-side operation unit 39 includes a zoom ring 39a and a zoom lever 39b, and receives input of various instructions to the imaging optical system 36. The operation amount of the zoom ring 39a is detected by a detection unit 391 such as an encoder, and is input to the lens-side control unit 33.

As illustrated in FIG. 2, the lens-side terminal holding unit 32 includes an LDET (L) terminal, a VBAT (L) terminal, a PGND (L) terminal, a V33 (L) terminal, a GND (L) terminal, an RDY (L) terminal, a DATAB (L) terminal, a CLK (L) terminal, a DATAL (L) terminal, an HCLK (L) terminal, and an HDATA (L) terminal. These eleven lens-side terminals in total are collectively referred to as a lens-side terminal group.

When the interchangeable lens 3 is mounted on the camera body 2, the body-side terminals and the lens-side terminals are electrically connected to each other as indicated by broken lines in FIG. 2. Specifically, the LDET (L) terminal is connected to the LDET (B) terminal, the VBAT (L) terminal is connected to the VBAT (B) terminal, the PGND (L) terminal is connected to the PGND (B) terminal, the V33 (L) terminal is connected to the V33 (B) terminal, and the GND (L) terminal is connected to the GND (B) terminal. Further, the RDY (L) terminal is connected to the RDY (B) terminal, the DATAB (L) terminal is connected to the DATAB (B) terminal, the CLK (L) terminal is connected to the CLK (B) terminal, and the DATAL (L) terminal is connected to the DATAL (B) terminal. The HCLK (L) terminal is connected to the HCLK (B) terminal, and the HDATA (L) terminal is connected to the HDATA (B) terminal. The roles of the individual lens-side terminals are the same as the roles of the body-side terminals with which the lens-side terminals are in contact, respectively. and thus the description thereof will be omitted.

The LDET (L) is grounded via a resistor R3. When the LDET (L) terminal contacts the LDET (B), the potential of the LDET (B) terminal is pulled down. The VBAT (L) terminal and the PGND (L) terminal are connected to the first drive unit 37 and the second drive unit 38. A so-called bypass capacitor C1 is connected between the VBAT (L) terminal and the PGND (L) terminal.

The V33 (L) terminal and the GND (L) terminal are connected to each unit such as the lens-side control unit 33. A bypass capacitor C2 is connected between the V33 (L) terminal and the GND (L) terminal.

The RDY (L) terminal, the DATAB (L) terminal, the CLK (L) terminal, and the DATAL (L) terminal are connected to the lens-side first communication unit 34a, and the HCLK (L) terminal and the HDATA (L) terminal are connected to the lens-side second communication unit 34b.

### (Command Data Communication)

Communication in which, after a control command (command) from the body-side control unit 23 is transmitted to the lens-side control unit 33 of the interchangeable lens 3, control content (control data) from the body-side control unit 23 and response content (response data) from the lens-side control unit 33 are transmitted and received in parallel is referred to as command data communication. The command data communication is a full duplex communication. The command data communication is performed by digital data communication using the RDY (B) terminal, the RDY (L) terminal, the DATAB (B) terminal, the DATAB (L) terminal, the CLK (B) terminal, the CLK (L) terminal, the DATAL (B) terminal, and the DATAL (L) terminal via the body-side first communication unit 24a and the lens-side first communication unit 34a.

The body-side control unit 23 transmits various control commands and control contents to the interchangeable lens 3 by command data communication via the body-side communication unit 24 and the lens-side communication unit 34, and receives response contents from the interchangeable lens 3 to transmit and receive various information to and from the interchangeable lens 3. The control command here is, for example, a transmission command of lens information. The various types of information received from the interchangeable lens 3 include, for example, model information of the interchangeable lens 3, a cooperative function support flag described later, detection resolution of the zoom ring 39a, information indicating optical characteristics such as a focal length of the imaging optical system 36, and the like. The various information transmitted to the interchangeable lens 3 includes, for example, control contents such as a drive amount of the lens, model information of the camera body 2, and the like. Note that the control command also includes a drive command for the zoom lens 36a. The lens-side control unit 33 receives various control commands from the body-side control unit 23, acquires various information from the body-side control unit 23, and transmits various information to the body-side control unit 23 through the command data communication.

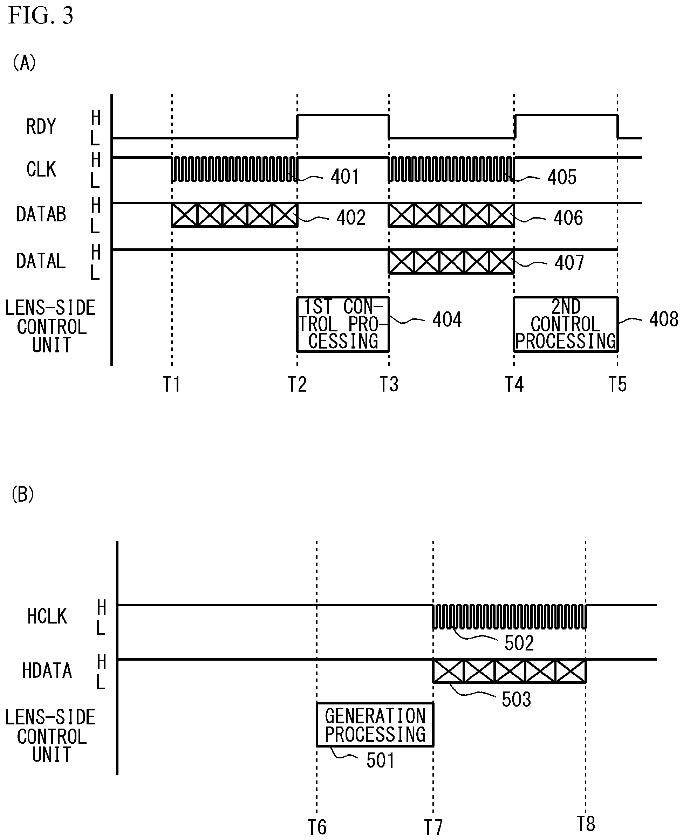

FIG. 3(A) is an example of a timing chart illustrating the timing of command data communication. The body-side control unit 23 first confirms the signal level of the RDY (B) terminal at the start (T1) of the command data communication. The signal level of the RDY (B) terminal indicates whether or not the lens-side control unit 33 can perform the command data communication. In a case where the command data communication cannot be performed, the lens-side control unit 33 sets the signal level (potential) of the RDY (L) terminal to a high level (H level). In a case where the command data communication can be performed, the lens-side control unit 33 sets the signal level (potential) of the RDY (L) terminal to a low level (L level) via the lens-side communication unit 34.

When the signal level of the RDY (B) terminal is low (L level) at the start (T1) of the command data communication, the body-side control unit 23 outputs a clock signal 401 from the CLK (B) terminal via the body-side first communication unit 24a. That is, the body-side control unit 23 transmits the clock signal 401 to the lens-side control unit 33 via the CLK (B) terminal and the CLK (L) terminal. The frequency at which the clock signals 401 in FIG. 3(A) repeat the high level and the low level is, for example, 8 MHz.

The body-side control unit 23 outputs a body-side command signal 402, which is a control command, from the DATAB (B) terminal in synchronization with the clock signal 401. That is, the body-side control unit 23 transmits the body-side command signal 402 to the lens-side control unit 33 via the DATAB (B) terminal and the DATAB (L) terminal. The body-side command signal 402 indicated by switching between the high level and the low level of DATAB in FIG. 3(A) is a signal representing control that the body-side control unit 23 instructs the lens-side control unit 33 through the command data communication. The body-side command signal 402 is, for example, a signal representing a request for model information of the interchangeable lens 3, a signal representing a request for information indicating the detection resolution of the zoom ring 39a of the interchangeable lens 3, a signal representing an instruction to drive the zoom lens 36a, or a signal representing an instruction to drive the focus lens 36b.

When the lens-side control unit 33 receives the body-side command signal 402 via the lens-side first communication unit 34a, the lens-side control unit 33 executes an inspection processing of inspecting the presence or absence of a communication error of the body-side command signal 402 using an error detection code (for example, a checksum data) included in the body-side command signal 402. Thereafter, the lens-side control unit 33 sets the signal level of the RDY (L) terminal to the high level (H level) (T2). When the signal level of the RDY (B) terminal is the high level, the body-side control unit 23 does not transmit the body-side command signal 402. The lens-side control unit 33 starts a first control processing 404 based on the instruction of the received body-side command signal 402.

For example, in a case where the received body-side command signal 402 has content requesting specific information of the interchangeable lens 3, the lens-side control unit 33 executes, as the first control processing 404, processing of generating the requested information as the lens-side data signal 407. Further, for example, in a case where the received body-side command signal 402 is the signal representing the instruction to drive the zoom lens 36a, the lens-side control unit 33 executes, as the first control processing 404, processing of generating a signal representing that the signal representing the instruction to drive the zoom lens 36a is received.

When the first control processing 404 is completed, the lens-side control unit 33 sets the signal level of the RDY (L) terminal to the low level (L level) via the lens-side communication unit 34 (T3). When the signal level of the RDY (B) terminal becomes the low level, the body-side control unit 23 outputs a clock signal 405 from the CLK (B) terminal. That is, the body-side control unit 23 transmits the clock signal 405 to the lens-side control unit 33 via the CLK (B) terminal and the CLK (L) terminal. When the signal level of the RDY (B) terminal is the high level, the body-side control unit 23 does not transmit or receive a body-side data signal 406 or the lens-side data signal 407.

The body-side control unit 23 outputs body-side data signal 406 from the DATAB (B) terminal via the body-side first communication unit 24a in synchronization with the clock signal 405. That is, the body-side control unit 23 transmits the body-side data signal 406 to the lens-side control unit 33 via the DATAB (B) terminal and the DATAB (L) terminal. The body-side data signal 406 is a signal representing a control parameter of the body-side command signal 402. For example, when the body-side command signal 402 is the signal representing the instruction to drive the zoom lens 36a, the corresponding body-side data signal 406 is a signal indicating the drive amount of the zoom lens 36a. The body-side data signal 406 is, for example, a signal representing information (model information of the camera body, and the like) required by the lens-side control unit 33 in the command data communication.

When the clock signal 405 is input to the CLK (L) terminal, the lens-side control unit 33 outputs the lens-side data signal 407 from the DATAL (L) terminal in synchronization with the clock signal 405. A lens-side data signal 407 indicated by switching between the high level and the low level of DATAL in FIG. 3(A) is a signal transmitted by the lens-side control unit 33 to the body-side control unit 23 through the command data communication. For example, in a case where the body-side command signal 402 is a signal representing the request for model information of the interchangeable lens 3, the corresponding lens-side data signal 407 is a signal representing the model information of the interchangeable lens 3. Further, for example, in a case where the received body-side command signal 402 is a signal representing the instruction to drive the zoom lens 36a, the corresponding lens-side data signal 407 is a signal representing that the signal representing the instruction to drive the zoom lens 36a is received.

When the transmission of the lens-side data signal 407 is completed, the lens-side control unit 33 sets the signal level of the RDY (L) terminal to the high level again (T4). The lens-side control unit 33 starts a second control processing 408 (described later) based on the instruction of the received body-side data signal 406. For example, in a case where the received body-side command signal 402 is the signal representing the instruction to drive the zoom lens 36a, the lens-side control unit 33 executes, as the second control processing 408, processing of moving the zoom lens 36a to a position designated by the body-side data signal 406.

When the second control processing 408 is completed, the lens-side control unit 33 sets the RDY (L) terminal to the low level via the lens-side communication unit 34 (T5).

The communication performed at the timings T1 to T5 described above is one command-data communication. In one command data communication, the body-side command signal 402 and the body-side data signal 406 are transmitted by the body-side control unit 23. That is, the body-side command signal 402 and the body-side data signal 406 are combined to form one piece of control data.

As described above, the lens-side control unit 33 performs the reception of the control data from the body-side control unit 23 and the transmission of the response data to the body-side communication unit 24 in parallel. That is, the command data communication is so-called full-duplex communication.

### (Hotline Communication)

As another communication system, there is communication in which data is transmitted in one direction from the lens-side control unit 33 of the interchangeable lens 3 to the body-side control unit 23 of the camera body 2, and this is referred to as hotline communication. The hotline communication is performed by the body-side control unit 23 and the lens-side control unit 33 using the HCLK (B) terminal, the HCLK (L) terminal, the HDATA (B) terminal, and the HDATA (L) terminal via the body-side second communication unit 24b and the lens-side second communication unit 34b.

The body-side control unit 23 acquires information on the state of the interchangeable lens 3 from the lens-side control unit 33 of the interchangeable lens 3 through the hotline communication. The information on the state of the interchangeable lens 3 includes, for example, the position of the focus lens 36b, the position of a camera shake correction lens (not illustrated), the position of a diaphragm, and the like. In the following description, information on the state of the interchangeable lens 3 including, for example, the position of the focus lens 36b, the position of the camera shake correction lens (not illustrated), the position of the diaphragm, and the like may be referred to as lens state information.

The camera shake correction lens is a member that can be moved (driven) so as to include a component in a direction perpendicular to the optical axis direction, and the diaphragm is a member that can be moved (driven) so as to change the size of an aperture through which a light flux passes.

The hotline communication is communication in which, when an instruction to start communication is transmitted from the camera body 2 via the command data communication, the lens-side control unit 33 autonomously transmits lens data to the body-side control unit 23 regardless of (independently of) the command data communication until an instruction to end the communication is transmitted.

FIG. 3(B) is an example of a timing chart illustrating the timing of hotline communication. When the lens-side control unit 33 receives a command to start hotline communication from the body-side control unit 23 of the camera body by command-data communication (T6), the lens-side control unit 33 performs a generation processing 501. The generation processing 501 is processing of acquiring the state of the interchangeable lens 3 at a sampling period of 1 millisecond, for example, and generating a lens signal 503 for hotline communication. When the generation of the lens signal 503 is completed (T7), the lens-side control unit 33 outputs a clock signal 502 from the HCLK (L) terminals via the lens-side second communication unit 34b. That is, the clock signal 502 is transmitted to the body-side control unit 23 via the HCLK (L) terminal and the HCLK (B) terminal. The frequency at which the clock signal 502 in FIG. 3(B) repeat the high level and the low level is, for example, 8 MHz to 20 MHz. That is, the frequency of the clock signal 502 of the hotline communication is approximately the same as or higher than the frequency of the clock signal 401 of the command data communication.

The lens-side control unit 33 outputs the lens signal 503 (for example, information on the position of the focus lens 36b) generated in the generation processing 501 from the HDATA (L) terminal in synchronization with the clock signal 502 via the lens-side second communication unit 34b. That is, the lens-side control unit 33 transmits the lens signal 503 to the body-side control unit 23 via the lens-side second communication unit 34b, the HDATA (L) terminal, the HDATA (B) terminal, and the body-side second communication unit 24b.

The lens signal 503 indicated by switching between the high level and the low level of the HDATA in FIG. 3(B) is a signal transmitted from the lens-side control unit 33 to the body-side control unit 23 through the hotline communication. The clock signal 502 and the lens signal 503 are terminated at the timing T8. The lens-side control unit 33 repeats the transmission of the lens data by the hotline communication at regular intervals (for example, 1 millisecond) until the lens-side control unit 33 receives the transmission stop instruction of the lens signal 503 by the command data communication.

The command data communication and the hotline communication can be executed partially or entirely in parallel. That is, the body-side control unit 23 and the lens-side control unit 33 can start and end the hotline communication when the command data communication is performed. Further, it is possible to start or end the command data communication during the hotline communication.

As described above, the hotline communication is performed independently of the command data communication. The lens-side control unit 33 transmits information on the state of the interchangeable lens 3 to the body-side control unit 23 through hotline communication regardless of the command data communication. Therefore, the body-side control unit 23 can continuously grasp the state of the interchangeable lens 3 even during the command data communication. Therefore, the body-side control unit 23 can continuously grasp the position of the focus lens 36b, and thus can control autofocus at high speed, for example. The same applies to the camera shake correction control and the aperture control.

In addition, the body-side control unit 23 can issue various instructions to the interchangeable lens 3 at any timing through command data communication even while the lens-side control unit 33 is performing hotline communication.

As described above, the interchangeable lens 3 according to the present embodiment is the power zoom lens that changes the focal length (imaging angle of view) by driving the zoom lens 36a in the optical axis OA direction by the first drive unit 37. In order to improve the convenience of the power zoom lens, the camera body 2 of the present embodiment is equipped with a cooperative function of causing the interchangeable lens 3 and the camera body 2 to cooperate with each other when the interchangeable lens 3 is the power zoom lens.

In the present embodiment, as a cooperation type between the interchangeable lens 3 and the camera body 2, an "extend type" and a "mixed type" are provided.

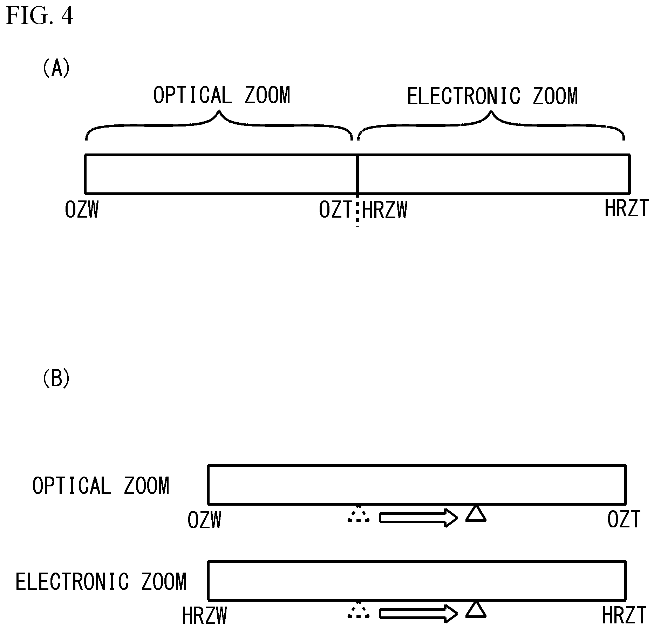

FIGs. 4(A) and 4(B) are conceptual diagrams for describing the extend type and the mixed type, respectively. In FIGs. 4(A) and 4(B), OZW indicates a wide end of the optical zoom, and OZT indicates a tele end of the optical zoom. Further, HRZW indicates the wide end of the electronic zoom, and HRZT indicates the tele end of the electronic zoom. Note that in the present embodiment, the electronic zoom is a so-called high resolution zoom that enables zooming without degradation of the image quality when the number of pixels during photographing without using the electronic zoom (for example, 4k) is smaller than the number of pixels included in the imaging element 27 (for example, 8k).

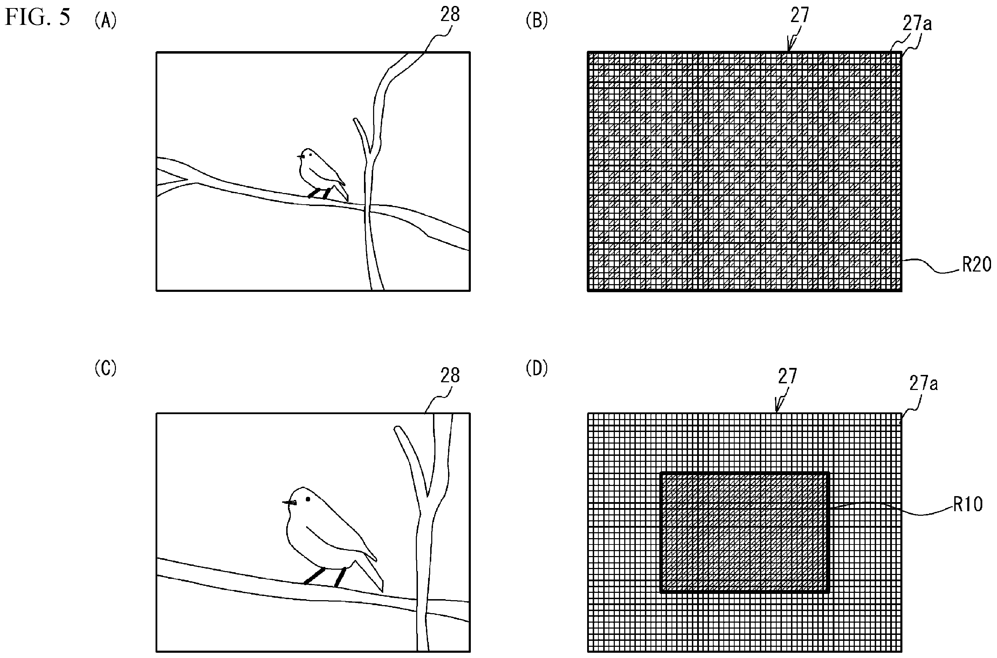

FIGs. 5(A) to 5(D) are diagrams for describing an outline of high resolution zoom. FIG. 5(A) illustrates an example of an image recorded in the body-side storage unit 25 when electronic zoom is not used, and FIG. 5(B) is a diagram illustrating pixels 27a of the imaging surface of the imaging element 27 used to generate the image illustrated in FIG. 5(A). Further, FIG. 5(C) illustrates an example of an image recorded in the body-side storage unit 25 in the case where the electronic zoom position is at the tele end, and FIG. 5(D) is a diagram illustrating the pixels 27a of the imaging surface of the imaging element 27 used to generate the image illustrated in FIG. 5(C). In FIGs. 5(B) and 5(D), the pixels 27a used to generate the image are indicated by hatching.

When the electronic zoom is used, 8k imaging is started. Therefore, the density of pixels on the imaging surface used to generate the image information captured in a first region R10 of the imaging surface when the electronic zoom is used as illustrated in FIG. 5(D) is higher than the density of pixels on the imaging surface used to generate the image information captured in the second region R20 larger than the first region R10 when the electronic zoom is not used as illustrated in FIG. 5(B). The number of pixels 27a used to generate an image stored in the body-side storage unit 25 when the electronic zoom is not used is substantially the same as the number of pixels 27a used to generate an image stored in the body-side storage unit 25 when the electronic zoom position is at the tele end. When the electronic zoom position is at the middle position between the wide end and the tele end, the signals output from the pixels (for example, 6k) used to generate the image information captured in the region having the size between the first region R10 and the second region R20 are subjected to the combining processing or the thinning processing to generate the image information having the same size (4k) as the image information output when the electronic zoom is not used. That is, the resolution of the image information generated based on the signals output from the pixels 27a included in the first region R10 of the imaging surface is equal to the resolution of the image information generated based on the signals output from the pixels 27a included in the second region R20 larger than the first region R10. This allows high resolution zoom to perform zooming without degradation of image quality.

Note that the number of pixels (pixel density) used for imaging may be changed in accordance with the position of the electronic zoom so that the image information has a predetermined size.

Note that the 8k imaging may be started not only in a case where the electronic zoom is used but also in a case where a setting that allows the electronic zoom to be used is made. For example, when the extended zoom is set, the 8k imaging may also be performed also in an optical zoom range.

Referring back to FIGs. 4(A) and 4(B), the cooperation type will be described. The extended type is a function of performing the optical zoom first when a zoom operation is received by either the body-side operation unit 29 or the lens-side operation unit 39, and enabling transition to the electronic zoom as it is when the focal length exceeds the focal length at the tele end of the optical zoom. That is, the function enables seamless transition between the optical zoom and the electronic zoom by an operation on one operation member. For example, it is assumed that the zoom ring 39a of the interchangeable lens 3 is rotated in a tele direction. In this case, as illustrated in FIG. 4(A), the optical zoom is first performed, and when the focal length of the imaging optical system 36 reaches the focal length of the tele end, the electronic zoom is started. At this time, the size of the region (at least a partial region) corresponding to the image displayed on the display unit 28 in the imaging surface of the imaging element 27 decreases as the zoom ring 39a rotates in the tele direction.

The mixed type is a function of performing optical zoom and electronic zoom in parallel when a zoom operation is received by either the body-side operation unit 29 or the lens-side operation unit 39. For example, it is assumed that the zoom ring 39a of the interchangeable lens 3 is rotated in the tele direction. In this case, as illustrated in FIG. 4(B), the optical zoom position and the electronic zoom position are changed from positions indicated by dotted triangles to positions indicated by solid triangles.

Note that in the present embodiment, it is also possible not to cooperate the interchangeable lens 3 and the camera body 2 with each other. The processing in a case where the interchangeable lens 3 and the camera body 2 do not cooperated with each other will be described later.

Next, in order to realize the "extend type" and the "mixed type", a processing executed by the body-side control unit 23 of the camera body 2 and the lens-side control unit 33 of the interchangeable lens 3 described above will be described in detail.

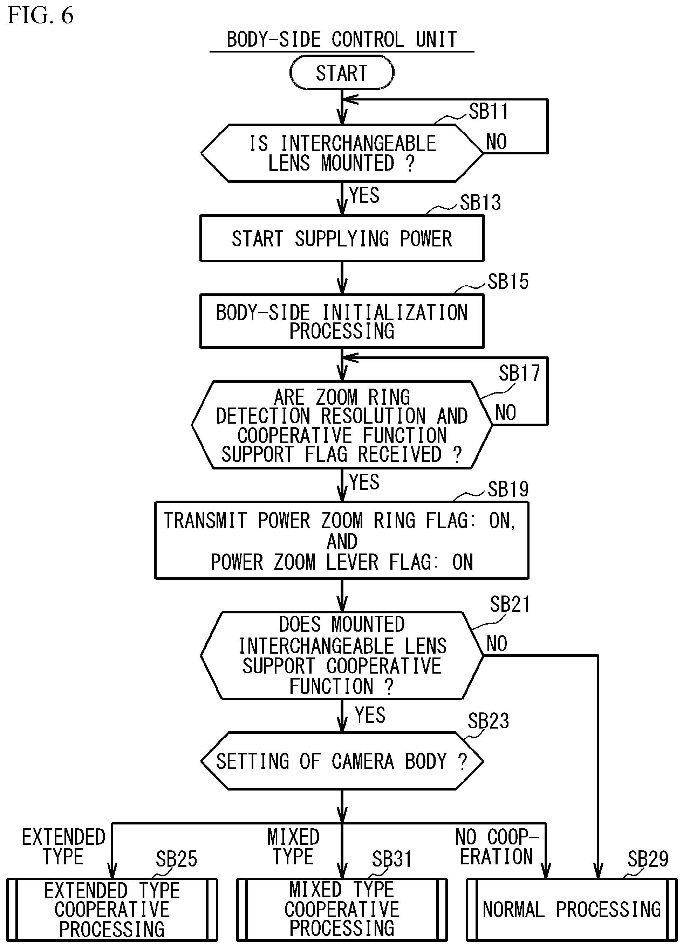

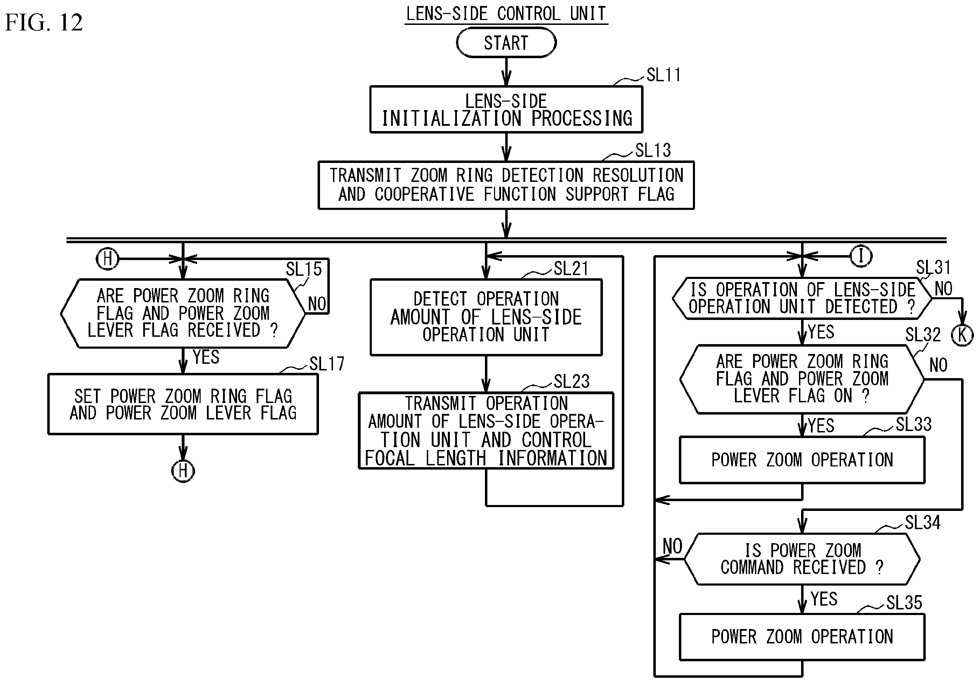

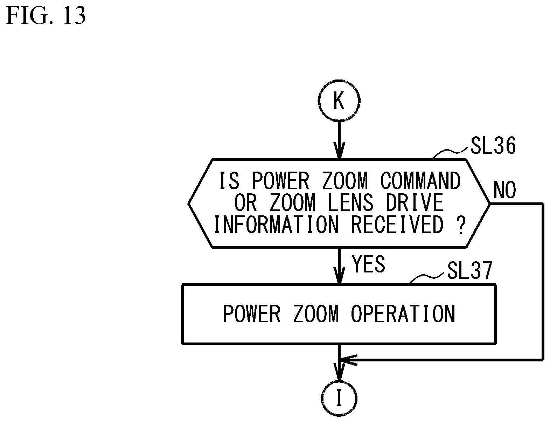

FIGs. 6 to 11 are flowcharts illustrating an example of processing executed by the body-side control unit 23, and FIGs. 12 and 13 are flowcharts illustrating an example of processing executed by the lens-side control unit 33.

The processing of FIG. 6 is started when the power of the camera body 2 is turned on. In the processing of FIG. 6, first, the body-side control unit 23 determines whether or not the interchangeable lens 3 is mounted on the camera body 2 (step SB11). When the interchangeable lens 3 is not mounted on the camera body 2, the signal level of the LDET (B) terminal is pulled up and is at a high level. When it is detected that the signal level of the LDET (B) terminal is the high level, the body-side control unit 23 determines that the interchangeable lens 3 is not mounted on the camera body 2 (step SB11 / NO). When the interchangeable lens 3 is not mounted, the body-side control unit 23 does not supply power to the VBAT (B) terminal and the V33 (B) terminal by the power supply unit 26.

When the interchangeable lens 3 is mounted on the camera body 2, the signal level of the LDET (B) terminal is pulled down to the low level. When the signal level of the LDET (B) terminal is the low level, the body-side control unit 23 determines that the interchangeable lens 3 is mounted. When the interchangeable lens 3 is mounted on the camera body 2 (step SB11 / YES), the body-side control unit 23 causes the power supply unit 26 to start power supply to the V33 (B) terminal (step SB13).

When the power supply to the V33 (B) terminal is started, power is supplied to the lens-side control unit 33 of the interchangeable lens 3 via the V33 (L) terminal, and the lens-side control unit 33 starts operating. Accordingly, the lens-side control unit 33 starts the processing illustrated in FIG. 12.

The lens-side control unit 33 that has started operation permits the initial communication by the command data communication with the body-side control unit 23. After the lens-side control unit 33 permits the initial communication, the body-side control unit 23 starts the initial communication. The initial communication includes a signal requesting power supply to the VBAT (L) terminal by the lens-side control unit 33. When the signal requesting power supply to the VBAT (L) terminal is transmitted from the lens-side control unit 33 to the body-side control unit 23, the body-side control unit 23 supplies power to the VBAT (B) terminal, and the initialization processing (FIG. 6: step SB15, FIG. 12: step SL11) is performed between the camera body 2 and the interchangeable lens 3.

In the initialization processing, information necessary for various operations of the camera system 1, such as a photographing operation and a focus adjustment operation, is exchanged between the camera body 2 and the interchangeable lens 3. For example, in the initialization processing, information on the drive resolution of the zoom lens 36a included in the interchangeable lens 3 is transmitted to the camera body 2. This is to prevent a situation in which the zoom lens 36a cannot be driven because the instruction value of the body-side control unit 23 is smaller than the drive resolution of the zoom lens 36a when the body-side control unit 23 issues a power zoom command (details will be described later) for instructing the drive of the zoom lens 36a. Further, for example, in the initialization processing, the speed (the maximum speed and the minimum speed) at which the zoom lens 36a can be driven when the zoom lens 36a is driven is transmitted to the camera body 2. This is because, when the body-side control unit 23 issues the power zoom command for instructing the drive of the zoom lens 36a, the body-side control unit 23 issues the instruction to drive the zoom lens 36a so that the drive speed of the zoom lens 36a is within a range from the maximum speed to the minimum speed. In the initialization processing, for example, the zoom lens 36a and the focus lens 36b of the interchangeable lens 3 are moved to the positions before the power is turned off or the default positions.

When the initialization processing (FIG. 6: step SB15) is completed, the body-side control unit 23 requests the lens-side control unit 33 to transmit the detection resolution of the zoom ring 39a and a flag (cooperative function support flag) indicating whether to support the cooperative function, and waits until the detection resolution of the zoom ring 39a and the cooperative function support flag are received (FIG. 6: step SB17 / NO). The detection resolution of the zoom ring 39a is information indicating the number of pulses output per rotation of the zoom ring 39a. The body-side control unit 23 can perform the electronic zoom control or the like according to the operation amount of the zoom ring 39a by acquiring the detection resolution of the zoom ring 39a.

On the other hand, as illustrated in FIG. 12, the lens-side control unit 33 transmits the detection resolution of the zoom ring 39a and the cooperative function support flag to the body-side control unit 23 via the lens-side first communication unit 34a in response to the request from the body-side control unit 23 (step SL13).

Returning to FIG. 6, when the body-side control unit 23 receives the detection resolution of the zoom ring 39a and the cooperative function support flag via the body-side first communication unit 24a (step SB17 / YES), the body-side control unit 23 transmits an instruction to set the power zoom ring flag and the power zoom lever flag to ON to the lens-side control unit 33 via the body-side first communication unit 24a (step SB19). The power zoom ring flag is a flag indicating whether or not in-lens control in which the lens-side control unit 33 controls the drive of the zoom lens 36a based on the operation information of the zoom ring 39a is possible when the zoom ring 39a of the interchangeable lens 3 is operated, and indicates that the in-lens control is possible in a case where the power zoom ring flag is ON. The power zoom lever flag is a flag indicating whether or not the in-lens control in which the lens-side control unit 33 controls the drive of the zoom lens 36a based on the operation information of the zoom lever 39b is possible when the zoom lever 39b of the interchangeable lens 3 is operated, and indicates that the in-lens control is possible when the power zoom lever flag is ON.

Next, the body-side control unit 23 determines whether or not the mounted interchangeable lens 3 supports the cooperative function (step SB21). The body-side control unit 23 can determine whether or not the mounted interchangeable lens 3 supports the cooperative function based on the cooperative function support flag received in step SB17.

In a case where the mounted interchangeable lens 3 does not support the cooperative function(step SB21 / NO), the body-side control unit 23 executes a normal processing (step SB29) described later.

On the other hand, in a case where the mounted interchangeable lens 3 supports the cooperative function (step SB21 / YES), the body-side control unit 23 confirms the setting of the cooperative function of the camera body 2 (step SB23).

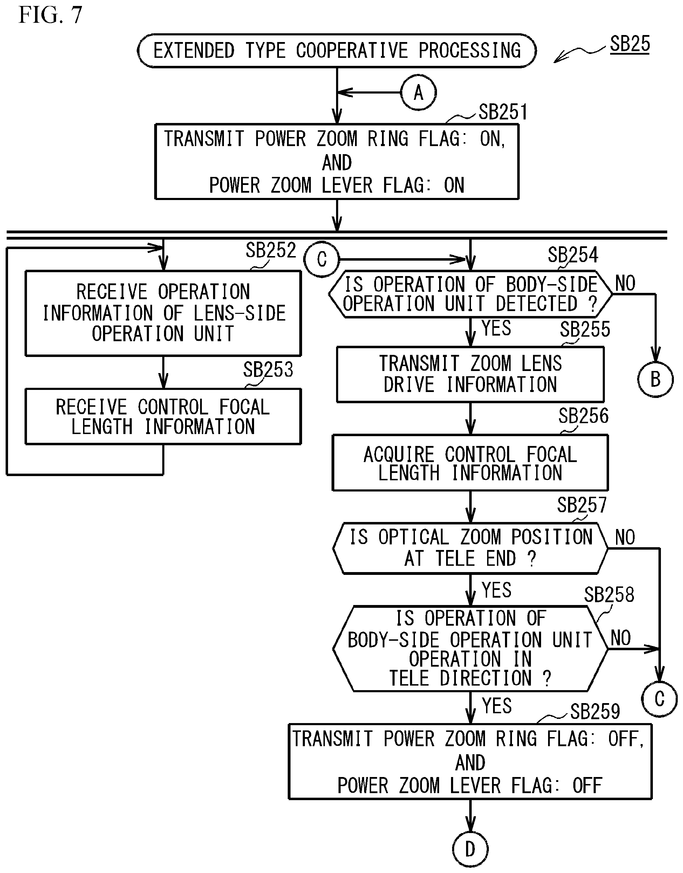

In a case where the "extended type" is set in the camera body 2, the body-side control unit 23 executes the extended type cooperative processing (step SB25). FIGs. 7 to 9 are flowcharts illustrating an example of the extended type cooperative processing.

In the extended cooperative processing, first, the body-side control unit 23 transmits the instruction to set the power zoom ring flag and the power zoom lever flag to ON to the lens-side control unit 33 via the body-side first communication unit 24a (step SB251).

Next, the body-side control unit 23 executes the processing of steps SB252 and SB253 and the processing of steps SB254 to SB272 in parallel.

First, the processing of the step SB252 and the SB253 will be described. In the present embodiment, the body-side control unit 23 repeatedly requests the lens-side control unit 33 to transmit the batch transmission information at regular time intervals. The batch transmission information includes various types of information used by the body-side control unit 23 to control the camera system 1, and includes operation information of the lens-side operation unit 39 and control focal length information indicating the position of the zoom lens 36a.

The operation information of the lens-side operation unit 39 includes the operation amount and the operation direction (the tele direction or the wide direction) of each of the zoom ring 39a and the zoom lever 39b included in the lens-side operation unit 39.

The control focal length information is, for example, information indicating a focal length (mm) calculated from a position (an integer of 0 to 100) of the zoom lens 36a represented by dividing a variable magnification range of the imaging optical system 36 into 100 parts, and setting the wide end as 0 and the tele end as 100.

As described above, since the request for the batch transmission information by the body-side control unit 23 is repeatedly performed at regular time intervals, the body-side control unit 23 repeatedly receives the operation information (step SB252) of the lens-side operation unit 39 and the control focal length (step SB253) from the lens-side control unit 33 at regular time intervals. However, the body-side control unit 23 can interrupt between requests for the batch transmission information that are repeatedly performed, and can execute command data communication such as a drive instruction to the interchangeable lens 3, a request for information that is not included in the batch transmission information, or the like.

The body-side control unit 23 determines whether or not the operation of the body-side operation unit 29 is detected in parallel with the reception of the operation information of the lens-side operation unit 39 and the control focal length information (step SB254).

In a case where the operation of the body-side operation unit 29 is detected (step SB254 / YES), the body-side control unit 23 generates zoom lens drive information and transmits the zoom lens drive information to the lens-side control unit 33 (step SB255). In a case where the operated body-side operation unit 29 is, for example, the zoom button 29c, the body-side control unit 23 transmits the zoom lens drive information including a drive speed of the zoom lens 36a, a drive direction (the tele direction or a wide direction), and a drive start instruction to the lens-side control unit 33. The drive speed of the zoom lens 36a when the zoom button 29c is operated can be set by the user in the camera body 2. In addition, in a case where the operation of the zoom button 29c is ended, the body-side control unit 23 transmits the zoom lens drive information for stopping the drive of the zoom lens 36a to the lens-side control unit 33.

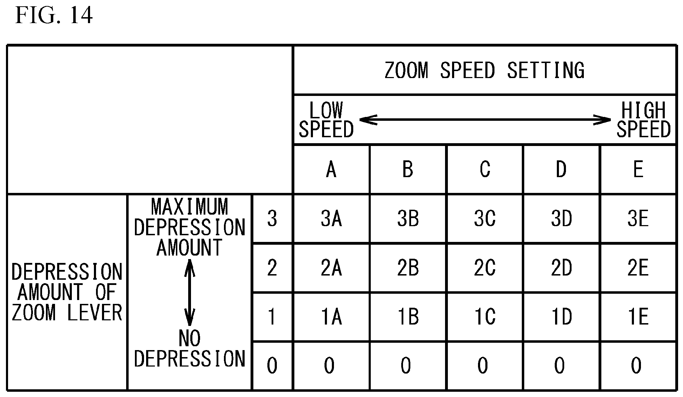

In addition, in a case where the operated body-side operation unit 29 is, for example, the zoom lever 29b, the body-side control unit 23 transmits two pieces of information, that is, the depression amount of the zoom lever 29b, and the zoom speed when the zoom lever 29b is operated, which is set in the camera body 2, to the lens-side control unit 33 as the zoom lens drive information. The zoom speed can be set by the user in the camera body 2. The lens-side control unit 33 determines the drive speed of the zoom lens 36a in the interchangeable lens 3 based on two pieces of information, that is, the depression amount of the zoom lever 29b and the zoom speed set in the camera body 2, and performs drive control of the zoom lens 36a. FIG. 14 is a diagram for describing the drive speed of the zoom lens 36a with respect to the depression amount of the zoom lever 29b and the setting of the zoom speed set in the camera body 2.

For example, as illustrated in FIG. 14, in the camera body 2, in a case where the zoom speed can be set in five stages of A to E and the depression amount of the zoom lever is divided into four stages of 0 to 3, the drive speed of the zoom lens 36a is defined as 0, 1A to 1E, 2A to 2E, and 3A to 3E by a combination of the pushing amount of the zoom lever 29b and the zoom speed set in the camera body 2. For example, when the depression amount of the zoom lever 29b is 2 and the zoom speed set in the camera body 2 is B, the drive speed of the zoom lens 36a is 2B. The levels of 0 to 3 representing the depression amount of the zoom lever correspond to the degree of operation determined by the operation amount of the operation member (the depression amount of the zoom lever). The zoom speed set in the camera body 2 corresponds to the degree of the drive speed of the zoom lens 36a.

The drive speed of the zoom lens 36a being 0 indicates that the zoom lens 36a is not driven. A drive speed 2A is higher than a drive speed 1A, and a drive speed 3A is higher than the drive speed 2A. A drive speed 1B is higher than the drive speed 1A, a drive speed 1C is higher than the drive speed 1B, a drive speed 1D is higher than the drive speed 1C, and a drive speed 1E is higher than the drive speed 1D. The same applies to the drive speeds 2A to 2E and the drive speeds 3A to 3E. The drive speed 3E may be higher than the drive speed 1E or may be the same speed as the drive speed 1E. Note that the depression amount of the zoom lever 29b and the zoom speed set in the camera body 2 may be repeatedly transmitted from the body-side control unit 23 to the lens-side control unit 33 as one piece of the batch transmission information.

In addition, in a case where the operated body-side operation unit 29 is a dial or a touch panel, the body-side control unit 23 transmits information indicating an operation amount per unit time, that is, an operation speed of the operation member (dial or touch panel) to the lens-side control unit 33 as zoom lens drive information. The operation amount per unit time may be repeatedly transmitted from the body-side control unit 23 to the lens-side control unit 33 as one piece of the batch transmission information, or the operation amount per unit time may be repeatedly transmitted from the body-side control unit 23 to the lens-side control unit 33 from the start of the operation of the body-side operation unit 29 to the end of the operation. The lens-side control unit 33 controls the drive of the zoom lens 36a based on the zoom lens drive information. Further, instead of the operation amount per unit time, the drive amount of the zoom lens 36a per unit time may be periodically transmitted. The operation amount per unit time and the drive amount of the zoom lens 36a per unit time, which are periodically transmitted, may be transmitted from the body-side control unit 23 to the lens-side control unit 33 as one piece of the batch transmission information.

Next, the body-side control unit 23 acquires the control focal length information (step SB256). The control focal length information may be acquired from the batch transmission information that is periodically received, or the control focal length information included in the batch transmission information may be stored in the body-side storage unit 25 and acquired from the body-side storage unit 25.

Next, the body-side control unit 23 determines whether or not the optical zoom position is at the telephoto end (step SB257). When the optical zoom position is not at the telephoto end (step SB257 / NO), the processing returns to step SB254 in FIG. 7.

On the other hand, when the optical zoom position is at the telephoto end (step SB257 / YES), the body-side control unit 23 determines whether or not the operation of the body-side operation unit 29 is an operation in the tele direction (step SB258). When the operation of the body-side operation unit 29 is not the operation in the tele direction (step SB258 / NO), the processing returns to step SB254 in FIG. 7. This is because, as described with reference to FIG. 4(A), in the extended type, when the optical zoom position is at the tele end, if the operation in the tele direction is further performed, the zoom state is shifted to the electronic zoom, but if the operation of the body-side operation unit 29 is not the operation in the tele direction, the zoom state does not need to be shifted to the electronic zoom.

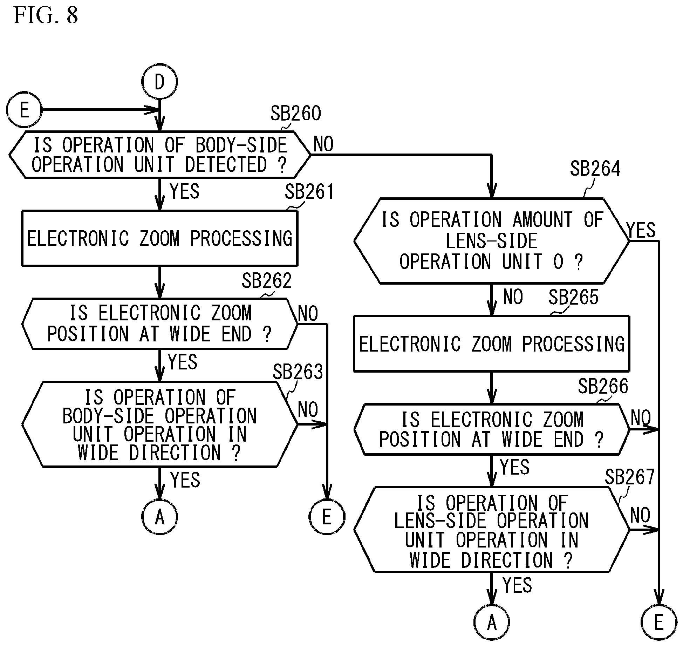

In a case where the operation of the body-side operation unit 29 is the operation in the tele direction (step SB258 / YES), the body-side control unit 23 transmits an instruction to set the power zoom ring flag and the power zoom lever flag to OFF to the lens-side control unit 33 via the body-side first communication unit 24a (step SB259), and proceeds to step SB260 in FIG. 8. This prohibits the in-lens control in the interchangeable lens 3.

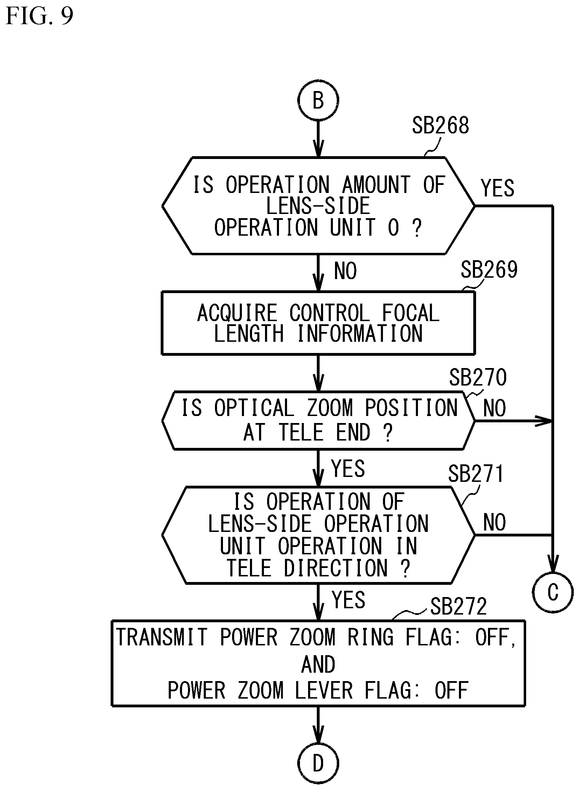

In a case where the operation of the body-side operation unit 29 is not detected (step SB254 / NO), the body-side control unit 23 determines whether or not the operation amount of the lens-side operation unit 39 is 0 (FIG. 9: step SB268). The operation amount of the lens-side operation unit 39 can be acquired from the operation information of the lens-side operation unit 39 included in the batch transmission information periodically received.

When the operation amount of the lens-side operation unit 39 is 0 (step SB268 / YES), it means that neither the body-side operation unit 29 nor the lens-side operation unit 39 is operated. In this case, the body-side control unit 23 returns to step SB254 in FIG. 7.

In a case where the operation amount of the lens-side operation unit 39 is not 0 (step SB268 / NO), the body-side control unit 23 acquires the control focal length information (step SB269). The control focal length information may be acquired from the batch transmission information that is periodically received, or the control focal length information included in the batch transmission information may be stored in the body-side storage unit 25 and acquired from the body-side storage unit 25.

In the extend type, when the lens-side operation unit 39 is operated, the in-lens control, that is, the control in which the lens-side control unit 33 drives the zoom lens 36a based on the operation information of the lens-side operation unit 39 is executed until the optical zoom position becomes the tele end. Therefore, when the operation amount of the lens-side operation unit 39 is not 0, the body-side control unit 23 acquires the control focal length information in order to determine whether or not the position of the zoom lens 36a moved by the in-lens control is at the telephoto end.

Next, the body-side control unit 23 determines whether or not the optical zoom position is at the telephoto end (step SB270). When the optical zoom position is not at the telephoto end (step SB270 / NO), the processing returns to step SB254 in FIG. 7.

On the other hand, in a case where the optical zoom position is the telephoto end (step SB270 / YES), the body-side control unit 23 determines whether or not the operation of the lens-side operation unit 39 is the operation in the tele direction (step SB271).

When the operation of the lens-side operation unit 39 is not the operation in the tele direction (step SB271 / NO), the processing returns to step SB254 in FIG. 7. As described with reference to FIG. 4(A), in the extended type, when the optical zoom position is at the tele end, if the operation in the tele direction is further performed, the zoom state is shifted to the electronic zoom, but when the operation of the lens-side operation unit 39 is not the operation in the tele direction, it is not necessary to shift to the electronic zoom.

In a case where the operation of the lens-side operation unit 39 is the operation in the tele direction (step SB271 / YES), the body-side control unit 23 transmits the instruction to set the power zoom ring flag and the power zoom lever flag to OFF to the lens-side control unit 33 via the body-side first communication unit 24a (step SB272), and proceeds to step SB260 in FIG. 8. This prohibits the in-lens control in the interchangeable lens 3. In this way, the information indicating whether or not the in-lens control is possible (the power zoom ring flag and the power zoom lever flag) is determined based on the control focal length information indicating the focal length and the operation information (operation signal).

As described with reference to FIG. 4(A), in the extended type, when the optical zoom position is at the telephoto end, if the operation in the tele direction is further performed, the zoom state is shifted to the electronic zoom. Therefore, when the optical zoom position is the telephoto end (step SB257 / YES) and the operation of the body-side operation unit 29 is the operation in the tele direction (step SB258 / YES), or when the optical zoom position is the telephoto end (step SB270 / YES) and the operation of the lens-side operation unit 39 is the operation in the tele direction (step SB271 / YES), the processing proceeds to the electronic zoom. Therefore, in order to prohibit the lens-side control unit 33 from driving the zoom lens 36a, the instruction to set the power zoom ring flag and the power zoom lever flag to OFF is transmitted to the lens-side control unit 33.

The body-side control unit 23 determines whether or not the operation of the body-side operation unit 29 is detected (FIG. 8: step SB260).

In a case where the operation of the body-side operation unit 29 is not detected (step SB260 / NO), the body-side control unit 23 determines whether or not the operation amount of the lens-side operation unit 39 is 0 (step SB264). The operation amount of the lens-side operation unit 39 can be acquired from the operation information of the lens-side operation unit 39 included in the batch transmission information periodically received.

In a case where the operation amount of the lens-side operation unit 39 is 0 (step SB264 / YES), neither the body-side operation unit 29 nor the lens-side operation unit 39 is operated, and thus the processing returns to step SB260.

In a case where the operation amount of the lens-side operation unit 39 is not 0 (step SB264 / NO), the body-side control unit 23 performs electronic zoom processing of enlarging or reducing at least the partial region (the region corresponding to the image displayed on the display unit 28) of the imaging surface of the imaging element 27 according to the operation amount of the lens-side operation unit 39 (step SB265).

Next, the body-side control unit 23 determines whether or not the electronic zoom position is at the wide end (step SB266). When the electronic zoom position is not at the wide end (step SB266 / NO), the processing returns to step SB260.

On the other hand, in a case where the electronic zoom position is at the wide end (step SB266 / YES), the body-side control unit 23 determines whether or not the operation of the lens-side operation unit 39 is the operation in the wide direction (step SB267). Whether or not the operation of the lens-side operation unit 39 is the operation in the wide direction can be determined from the operation information of the lens-side operation unit 39 included in the batch transmission information periodically received.

When the operation of the lens-side operation unit 39 is not the operation in the wide direction (step SB267 / NO), the processing returns to step SB260. As described with reference to FIG. 4(A), in the extended type, when the electronic zoom position is at the wide end, if the operation in the wide direction is further performed, the operation is shifted to the optical zoom, but when the operation of the lens-side operation unit 39 is not the operation in the wide direction, it is not necessary to shift to the optical zoom.

On the other hand, when the operation of the lens-side operation unit 39 is the operation in the wide direction (step SB267 / YES), the processing returns to step SB251 in FIG. 7, and the instruction to set the power zoom lens flag and the power zoom lever flag to ON is transmitted to the lens-side control unit 33.

As illustrated in FIG. 4(A), in the extended type, when the electronic zoom position is at the wide end, if the operation in the wide direction is further performed, the operation is shifted to the optical zoom. Therefore, when the electronic zoom position is the wide end (step SB266 / YES) and the operation of the lens-side operation unit 39 is the operation in the wide direction (step SB267 / YES), the processing proceeds to the optical zoom. Therefore, when the lens-side operation unit 39 is operated, the instruction to set the power zoom ring flag and the power zoom lever flag to ON is transmitted to the lens-side control unit 33 so that the lens-side control unit 33 can drive the zoom lens 36a (so that the in-lens control can be performed) based on the operation information of the lens-side operation unit 39.

Incidentally, in the case where the operation of the body-side operation unit 29 is detected (step SB260 / YES), the body-side control unit 23 performs electronic zoom processing of enlarging or reducing at least the partial region (the region corresponding to the image displayed on the display unit 28) of the imaging surface of the imaging element 27 in accordance with the operation amount of the body-side operation unit 29 (step SB261).

Next, the body-side control unit 23 determines whether or not the electronic zoom position is at the wide end (step SB262). When the electronic zoom position is not at the wide end (step SB262 / NO), the processing returns to step SB260.

On the other hand, when the electronic zoom position is at the wide end (step SB262 / YES), the body-side control unit 23 determines whether or not the operation of the body-side operation unit 29 is the operation in the wide direction (step SB263).

When the operation of the body-side operation unit 29 is not the operation in the wide direction (step SB263 / NO), the processing returns to step SB260.

On the other hand, in a case where the operation of the body-side operation unit 29 is the operation in the wide direction (step SB263 / YES), the processing returns to step SB251 in FIG. 7, and the instruction to set the power zoom lens flag and the power zoom lever flag to ON is transmitted to the lens-side control unit 33. In a case where the electronic zoom position is at the wide end, when the operation in the wide direction is further performed, the electronic zoom is shifted to the optical zoom. By turning on the power zoom lens flag and the power zoom lever flag, the in-lens control can be performed.

The extended cooperative processing is repeatedly executed until the setting of the cooperation type is changed while the power of the camera body 2 is on.

Next, a case where the setting of the camera body 2 is a mixed type will be described. As illustrated in FIG. 6, when the setting of the camera body 2 is the mixed type, the body-side control unit 23 executes the mixed type cooperative processing (step SB31).

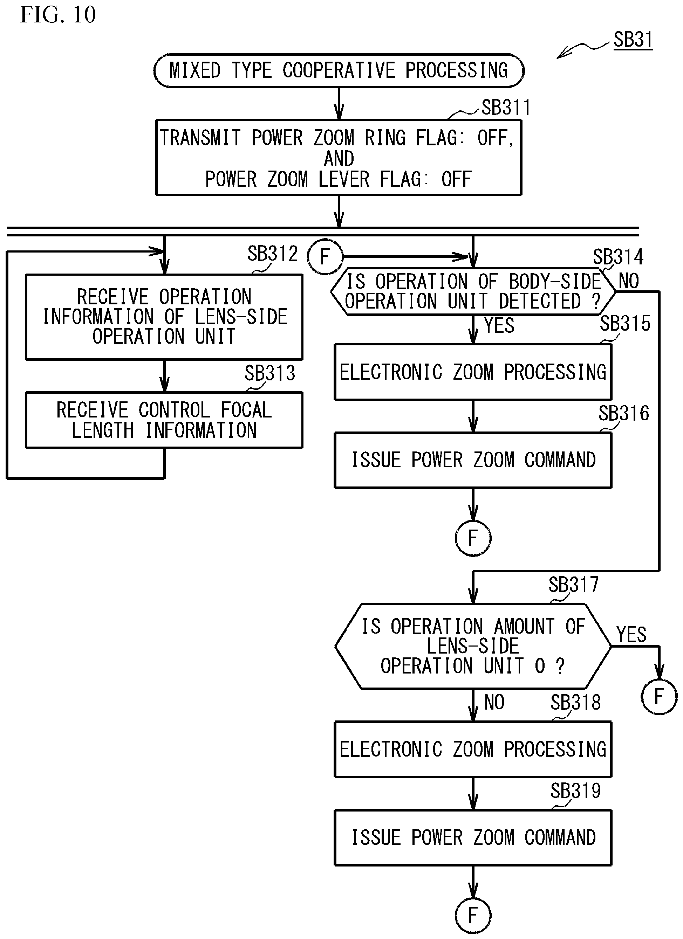

FIG. 10 is a flowchart illustrating details of the mixed type cooperative processing. In the mixed type cooperative processing, first, the body-side control unit 23 transmits the instruction to set the power zoom ring flag and the power zoom lever flag to OFF to the lens-side control unit 33 (step SB311). This is because, in the mixed type, even in a case where the lens-side operation unit 39 is operated, the body-side control unit 23 controls both the optical zoom and the electronic zoom, and thus the in-lens control is prohibited. In the mixed type cooperative processing, the body-side control unit 23 executes a mixed control in which the optical zoom control is performed while performing the electronic zoom control. In the mixed control, the electronic zoom control and the optical zoom control are performed simultaneously (in parallel).

After step SB311, the body-side control unit 23 executes the processing of steps SB312 and SB313 and the processing of steps SB314 to SB319 in parallel.

The body-side control unit 23 receives the operation information of the lens-side operation unit 39 from the lens-side control unit 33 (step SB312). The body-side control unit 23 receives the control focal length information from the lens-side control unit 33 (step SB313). As described above, the body-side control unit 23 repeatedly requests the lens-side control unit 33 to transmit the batch transmission information at regular time intervals. Therefore, the body-side control unit 23 repeatedly receives the operation information of the lens-side operation unit 39 and the control focal length information from the lens-side control unit 33 at regular time intervals.

In parallel with the processing of steps SB312 and SB313, the body-side control unit 23 determines whether or not the operation of the body-side operation unit 29 is detected (step SB314).

In a case where the operation of the body-side operation unit 29 is not detected (step SB314 /NO), the body-side control unit 23 determines whether or not the operation amount of the lens-side operation unit 39 included in the batch transmission information is 0 (step SB317). In a case where the operation amount of the lens-side operation unit 39 included in the batch transmission information is 0 (step SB317 / YES), the processing returns to step SB314.

In a case where the operation amount of the lens-side operation unit 39 is not 0 (step SB317 / NO), the body-side control unit 23 executes the electronic zoom processing based on the operation amount of the lens-side operation unit 39 (step SB318). The body-side control unit 23 issues the power zoom command for instructing the drive of the zoom lens 36a according to the operation amount of the lens-side operation unit 39 (step SB319). The power zoom command is transmitted to the lens-side control unit 33 via the body-side first communication unit 24a.

In the mixed type, when the lens-side operation unit 39 or the body-side operation unit 29 is operated, the position of the optical zoom and the position of the electronic zoom are changed at the same ratio based on the operation amount thereof. This point will be described.

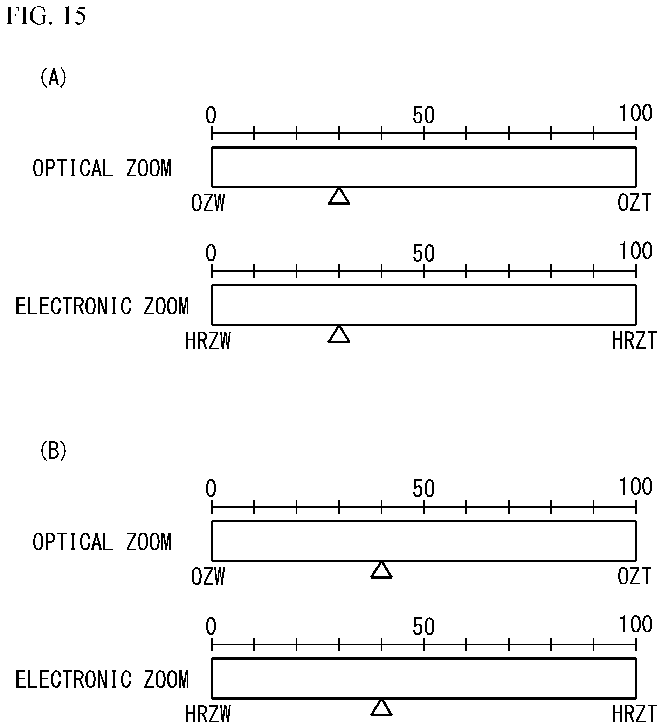

FIGs. 15(A) and 15(B) are diagrams for describing changes in the optical zoom position and the electronic zoom position in the mixed type. In the following example, it is assumed that the zoom ring 39a is operated.

FIG. 15(A) is a diagram illustrating an example of the optical zoom position and the electronic zoom position before the zoom ring 39a is operated. The optical zoom position is a position (an integer of 0 to 100) of the zoom lens 36a represented by dividing the variable magnification range of the imaging optical system 36 into 100 parts, and setting the wide end to 0 and the tele end to 100. The electronic zoom position is represented by dividing the variable power range of the electronic zoom into 100, and setting the wide end to 0 and the tele end to 100. Therefore, for example, when the magnification range of the imaging optical system 36 is 4 times and the magnification range of the electronic zoom is 2 times, the magnification of the optical zoom at the optical zoom position of 10 and the magnification of the electronic zoom at the electronic zoom position of 10 are different from each other, but the change rate of the magnification of the optical zoom and the change rate of the magnification of the electronic zoom when the optical zoom position and the electronic zoom position increase by 1, respectively, are equal to each other.

Here, for example, it is assumed that when the zoom ring 39a is rotated by 100 degrees, the optical zoom position moves from the wide end to the tele end. In a case where the optical zoom position and the electronic zoom position before the zoom ring 39a is operated are 30, respectively, and the zoom ring 39a is rotated by 10 degrees in the tele direction, the body-side control unit 23 sets the electronic zoom position to 40 in step SB318. Further, the body-side control unit 23 issues, in step SB319, the power zoom command including a drive instruction position: 40 of the zoom lens 36a and a drive maintaining target time indicating a time taken to move the zoom lens 36a to the drive instruction position: 40. The drive maintaining target time is set to a time in which the position of the zoom lens 36a can be continuously changed so as not to give a sense of discomfort to the user in consideration of the timing at which the body-side control unit 23 can issue the power zoom command next. The power zoom command is issued periodically. The body-side control unit 23 can determine the drive speed (speed of the magnification change) of the zoom lens 36a based on the operation information of the zoom ring 39a, and calculate the drive maintaining target time (information indicating the speed of the variable magnification) from the drive amount from the current position of the zoom lens 36a to the drive instruction position and the drive speed of the zoom lens 36a.

By the processing of step SB318 and the processing of step SB319, as illustrated in FIG. 15(B), both the optical zoom position and the electronic zoom position become 40. Therefore, changing the electronic zoom position and the optical zoom position at the same rate means changing the electronic zoom position and the optical zoom position by the same standardized value in the standardized variable magnification range of the optical zoom and the standardized variable magnification range of the electronic zoom. This can be rephrased as making the ratio of changing the size of the partial region of the imaging surface of the imaging element 27 corresponding to the image displayed on the display unit 28 equal to the ratio of changing the magnification of the imaging optical system 36. In the present embodiment, it is assumed that the change in the magnification (optical zoom position and electronic zoom position) with respect to the operation is constant.

After the processing of step SB319, the processing returns to step SB314.

When the operation of the body-side operation unit 29 is detected (step SB314 / YES), the body-side control unit 23 executes the electronic zoom processing based on the operation amount of the body-side operation unit 29 (step SB315). The body-side control unit 23 issues the power zoom command for driving the zoom lens 36a based on the operation amount of the body-side operation unit 29 (step SB316).

After the processing of step SB316, the processing returns to step SB314.

The mixed type cooperative processing is repeatedly executed until the setting of the cooperation type is changed while the power supply of the camera body 2 is on. In the mixed type cooperative processing, the power zoom command is issued regardless of which of the body-side operation unit 29 and the lens-side operation unit 39 is operated, and regardless of the type of the operation member of the body-side operation unit 29 and the lens-side operation unit 39. Accordingly, the body-side control unit 23 can accurately control the drive of the zoom lens 36a, and can match the magnification operations of the electronic zoom and the optical zoom.

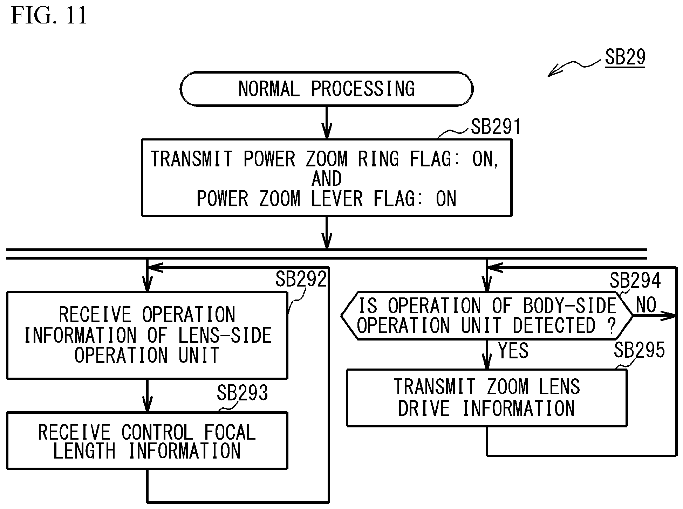

Next, a case where the setting of the camera body 2 is no cooperation will be described. As illustrated in FIG. 6, when the setting of the camera body 2 is no cooperation, the body-side control unit 23 executes the normal processing (step SB29). FIG. 11 is a flowchart illustrating details of the normal processing.

In the normal processing, first, the body-side control unit 23 transmits the instruction to set the power zoom ring flag and the power zoom lever flag to ON to the lens-side control unit 33 (step SB291). This is because, in the present embodiment, in the case of "no cooperation", when the lens-side operation unit 39 is operated, the lens-side control unit 33 performs the in-lens control in which the lens-side control unit 33 controls the drive of the zoom lens 36a based on the operation information of the lens-side operation unit 39. When the body-side operation unit 29 is operated, the lens-side control unit 33 performs out-of-lens control in which the lens-side control unit 33 controls the drive of the zoom lens 36a based on an instruction from the body-side control unit 23.

After step SB291, the body-side control unit 23 executes the processing of steps SB292 and SB293 and the processing of steps SB294 and SB295 in parallel. The body-side control unit 23 receives the operation information of the lens-side operation unit 39 from the lens-side control unit 33 (step SB292). The body-side control unit 23 receives the control focal length information from the lens-side control unit 33 (step SB293). As described above, the body-side control unit 23 repeatedly requests the lens-side control unit 33 to transmit the batch transmission information at regular time intervals. Therefore, the body-side control unit 23 repeatedly receives the operation information of the lens-side operation unit 39 and the control focal length information from the lens-side control unit 33 at regular time intervals.

In parallel with the processing of steps SB292 and SB293, the body-side control unit 23 determines whether or not the operation of the body-side operation unit 29 is detected (step SB294). When the operation of the body-side operation unit 29 is not detected (step SB294 / NO), the body-side control unit 23 repeats the processing of step SB294 until the operation of the body-side operation unit 29 is detected.

In a case where the operation of the body-side operation unit 29 is detected (step SB294 / YES), the body-side control unit 23 transmits zoom lens drive information for driving the zoom lens 36a to the lens-side control unit 33 based on the operation amount of the body-side operation unit 29, similarly to step SB255 (step SB295). In the present embodiment, in the normal processing, the zoom lens 36a is driven to vary the magnification of the optical zoom even when either the lens-side operation unit 39 or the body-side operation unit 29 is operated, but the present invention is not limited thereto. For example, when the lens-side operation unit 39 is operated, the lens-side control unit 33 may drive the zoom lens 36a to vary the magnification of the optical zoom, and when the body-side operation unit 29 is operated, the body-side control unit 23 may vary the magnification of the electronic zoom.

Next, the processing of the lens-side control unit 33 will be described. When the processing of step SL13 in FIG. 12 is completed, the lens-side control unit 33 executes the processing of steps SL15 and SL17, the processing of steps SL21 and SL23, and the processing of steps SL31 to SL35 in parallel.

The lens-side control unit 33 does not have information on the cooperation type set in the camera body 2. Therefore, in the present embodiment, the lens-side control unit 33 controls the drive of the zoom lens 36a based on whether or not the in-lens control is possible (ON / OFF of the power zoom ring flag and the power zoom lever flag) and whether or not the power zoom command or the zoom ring drive information is received from the body-side control unit 23. The power zoom ring flag and the power zoom lever flag are turned on by the processing of step SB19 (see FIG. 6) of the body-side control unit 23 immediately after the power of the camera body 2 is turned on.

Thereafter, the body-side control unit 23 instructs the power zoom ring flag and the power zoom lever flag to be turned on or off based on the cooperation type or the focal length and the operation information (steps SB251 and SB259 in FIG. 7, step SB311 in FIG. 10, step SB291 in FIG. 11, and the like). On the other hand, the lens-side control unit 33 receives the instruction to set the power zoom ring flag and the power zoom lever flag to ON or OFF, and executes processing based on the settings of the power zoom ring flag and the power zoom lever flag.

Therefore, the lens-side control unit 33 periodically determines whether or not the power zoom ring flag and the power zoom lever flag are received (step SL15 / NO). Then, when the lens-side control unit 33 receives the power zoom ring flag and the power zoom lever flag (step SL15 / YES), the lens-side control unit 33 sets the power zoom ring flag and the power zoom lever flag according to the instruction (ON or OFF) from the body-side control unit 23 (step SL17), and returns to step SL15. The processing of steps SL15 and SL17 is repeatedly executed until the power of the camera body 2 is turned off.

In parallel with the processing of steps SL15 and SL17, the lens-side control unit 33 detects the operation amount of the lens-side operation unit 39 (step SL21). The operation amount may be 0.

The lens-side control unit 33 transmits the operation information of the lens-side operation unit 39 and the control focal length information indicating the position of the zoom lens 36a to the body-side control unit 23 as the batch transmission information (step SL23). The processing of the steps SL21 and SL23 is also repeated at a constant cycle.

In parallel with the processing of steps SL15 and SL17 and the processing of steps SL21 and SL23, the lens-side control unit 33 determines whether or not the operation of the lens-side operation unit 39 is detected (step SL31). In a case where the operation of the lens-side operation unit 39 is detected (step SL31 / YES), the lens-side control unit 33 determines whether or not the power zoom ring flag and the power zoom lever flag are ON (step SL32).

When the power zoom ring flag and the power zoom lever flag are ON (step SL32 / YES), the lens-side control unit 33 executes the power zoom operation (step SL33). In particular, the lens-side control unit 33 executes the in-lens control for driving the zoom lens 36a based on the operation amount of the lens-side operation unit 39. After the power zoom operation is completed, the processing returns to step SL31.

On the other hand, in a case where the operation of the lens-side operation unit 39 is detected (step SL31 / YES), but the power zoom ring flag and the power zoom lever flag are OFF (step SL32 / NO), the lens-side control unit 33 cannot perform the in-lens control. In this case, the lens-side control unit 33 executes the out-of-lens control for driving the zoom lens 36a according to the instruction of the body-side control unit 23, or the body-side control unit 23 performs the electronic zoom processing based on the operation amount of the lens-side operation unit 39. Therefore, the lens-side control unit 33 determines whether or not the power zoom command is received (step SL34). When the camera body 2 is set to the "extended type", the power zoom ring flag and the power zoom lever flag being OFF means that the optical zoom position is at the tele end and the electronic zoom is performed. In this case, since the power zoom command is not transmitted from the body-side control unit 23, the determination of step SL34 is NO.

When the power zoom command is not received (step SL34 / NO), the processing returns to step SL31.

On the other hand, in the case where the setting of the camera body 2 is the "mixed type", the optical zoom and the electronic zoom are performed in parallel, and thus the power zoom command is transmitted from the body-side control unit 23. Therefore, when the lens-side control unit 33 receives the power zoom command from the body-side control unit 23 via the lens-side first communication unit 34a (step SL34 / YES), the lens-side control unit 33 performs the power zoom operation according to the instruction in the power zoom command (step SL35). Specifically, the zoom lens 36a is moved to the drive instruction position of the zoom lens 36a included in the power zoom command. At this time, the drive speed of the zoom lens 36a is set to a speed at which the time until the zoom lens 36a arrives at the drive instruction position is equal to or slightly longer than the drive maintaining target time.

After the step SL35 is completed, the processing returns to the step SL31.

In a case where the operation of the lens-side operation unit 39 is not detected (step SL31 / NO), the lens-side control unit 33 determines whether or not the power zoom command or the zoom lens drive information is received from the body-side control unit 23 (step SL36). In the case of the "extended type", when the body-side operation unit 29 is operated without the lens-side operation unit 39 being operated, the body-side control unit 23 generates and transmits the zoom lens drive information based on the operation of the body-side operation unit 29 if the optical zoom position is not at the tele end. In the case of the "mixed type", when the body-side operation unit 29 is operated without the lens-side operation unit 39 being operated, the body-side control unit 23 issues the power zoom command based on the operation of the body-side operation unit 29. In the case of "no cooperation", when the body-side operation unit 29 is operated, the body-side control unit 23 generates and transmits zoom lens drive information based on the operation of the body-side operation unit 29. Note that if the body-side operation unit 29 is not operated, the zoom lens drive information is not issued from the body-side control unit 23.

In a case where neither the power zoom command nor the zoom lens drive information is received from the body-side control unit 23 (step SL36 / NO), the processing returns to step SL31. On the other hand, in a case where either the power zoom command or the zoom lens drive information is received from the body-side control unit 23 (step SL36 / YES), the power zoom operation is performed based on the power zoom command or the zoom lens drive information (step SL37), and then the processing returns to step SL31.

As described above in detail, according to the present embodiment, the camera system 1 includes the imaging element 27 having the imaging surface that captures the image formed by the imaging optical system 36 capable of varying magnification, and the body-side control unit 23. The body-side control unit 23 generates image information based on a signal output from at least the partial region of the imaging surface, and performs the electronic zoom control for changing the size of the partial region in parallel with the magnification of the imaging optical system 36. More specifically, the body-side control unit 23 performs the mixed control of performing the optical zoom control of varying the magnification of the imaging optical system 36 while performing the electronic zoom control. Since the optical zoom and the electronic zoom are performed in parallel, the change in the angle of view is increased by the electronic zoom as compared with the case where only the optical zoom is performed, and a large zoom magnification can be obtained.

In the present embodiment, the imaging surface includes the plurality of pixels 27a that receive light and output signals, and the resolution of image information generated based on signals output from pixels included in the first region R10 of the imaging surface and the resolution of image information generated based on signals output from pixels included in the second region R20 larger than the first region R10 are equal to each other. This enables the electronic zoom without degrading the image quality.

In the present embodiment, the camera system 1 includes the body-side communication unit 24 that communicates with the interchangeable lens 3 including the lens-side operation unit 39 that receives an instruction to vary the magnification and the imaging optical system 36, the body-side communication unit 24 (the body-side first communication unit 24a) receives the operation information of the lens-side operation unit 39 (information on the operation amount of the lens-side operation unit 39) from the interchangeable lens 3, and the body-side control unit 23 performs the mixed control based on the operation information of the lens-side operation unit 39. That is, the body-side control unit 23 performs the electronic zoom control based on the operation information of the lens-side operation unit 39, and performs optical zoom control based on the operation information of the lens-side operation unit 39. This allows the user to operate the lens-side operation unit 39 to execute the optical zoom and the electronic zoom in parallel.

In addition, in the present embodiment, the body-side communication unit 24 receives information indicating a speed at which the imaging optical system 36 can be driven upon varying the magnification of the imaging optical system 36. Accordingly, it is possible to instruct the drive of the zoom lens 36a within a range of speed at which the imaging optical system 36 (zoom lens 36a) can be driven.

In the present embodiment, the body-side communication unit 24 receives information indicating the time taken to vary the magnification of the imaging optical system 36 from the wide end to the tele end when the imaging optical system 36 is driven at the highest speed. In the present embodiment, the body-side communication unit 24 receives information indicating the time taken to vary the magnification of the imaging optical system 36 from the wide end to the tele end when the imaging optical system 36 is driven at the lowest speed. Accordingly, it is possible to instruct the drive of the zoom lens 36a within a range of speed at which the imaging optical system 36 (zoom lens 36a) can be driven.

In the present embodiment, the body-side communication unit 24 (body-side first communication unit 24a) receives operation information (instruction of variable magnification) of the lens-side operation unit 39 from the interchangeable lens 3, and the body-side control unit 23 transmits the power zoom command including the drive instruction position of the zoom lens and the drive maintaining target time determined from the drive speed of the zoom lens 36a to the interchangeable lens 3 (lens-side control unit 33) based on the operation information of the lens-side operation unit 39. This allows the body-side control unit 23 to control the drive of the zoom lens 36a and change the focal length when the lens-side operation unit 39 of the interchangeable lens 3 is operated.

According to the present embodiment, the interchangeable lens 3 is the interchangeable lens 3 that can be mounted on the camera body 2, and includes the imaging optical system 36 capable of varying the magnification, the lens-side operation unit 39 that receives the operation for instructing varying the magnification of the imaging optical system 36 from the user, the detection unit 391 that detects the operation received by the lens-side operation unit 39, the lens-side communication unit 34 (lens-side first communication unit 34a) that transmits information indicating the operation detected by the detection unit 391 to the camera body 2 and receives the power zoom command (instruction signal) for instructing varying the magnification of the imaging optical system 36 from the camera body 2, and the first drive unit 37 that drives the zoom lens 36a based on the power zoom command received by the lens-side communication unit 34. Accordingly, when the lens-side operation unit 39 of the interchangeable lens 3 is operated, the zoom lens 36a can be driven to change the focal length in accordance with an instruction (power zoom command) from the camera body 2.

In the present embodiment, the interchangeable lens 3 includes the lens-side control unit 33 that performs the out-of-lens control for controlling varying the magnification of the imaging optical system 36 based on the power zoom command (instruction signal) received by the lens-side communication unit 34 and the in-lens control for controlling varying the magnification of the imaging optical system 36 based on the information indicating the operation detected by the detection unit 391. This makes it possible to realize the extend type and the mixed type.

In the present embodiment, the lens-side communication unit 34 receives a signal indicating whether or not the in-lens control is possible from the camera body 2. Accordingly, for example, in a case where the in-lens control is not permitted, in the case of the extend type, the electronic zoom processing is performed in a case where the lens-side operation unit 39 is operated, and in the case of the mixed type, the out-of-lens control for driving the zoom lens 36a according to the instruction of the body-side control unit 23 can be performed.

In the present embodiment, the lens-side operation unit 39 includes the zoom ring 39a that receives the operation for instructing varying the magnification of the imaging optical system 36 and performs a rotation operation around the optical axis OA of the imaging optical system 36, and the lens-side communication unit 34 transmits information (detection resolution) indicating the number of pulses output per rotation of the zoom ring 39a to the camera body 2. This allows the body-side control unit 23 to determine the drive instruction position of the zoom lens 36a based on the operation amount of the zoom ring 39a (the number of pulses detected by the detection unit 391).

According to the present embodiment, the interchangeable lens 3 is the interchangeable lens 3 mountable on the camera body 2, and includes the imaging optical system 36 capable of varying the magnification, the lens-side operation unit 39 that receives the operation for instructing varying the magnification of the imaging optical system 36 from the user, the detection unit 391 that detects the operation received by the lens-side operation unit 39, the lens-side communication unit 34 that transmits information indicating the operation detected by the detection unit 391 to the camera body 2, and the lens-side control unit 33 that performs the in-lens control of controlling varying the magnification of the imaging optical system 36 based on the information indicating the operation detected by the detection unit 391. The lens-side communication unit 34 receives a signal indicating whether or not the in-lens control is possible from the camera body 2. This makes it possible to realize the extended type in which the lens-side control unit 33 drives the zoom lens 36a to perform optical zoom for changing the focal length of the imaging optical system 36 until the optical zoom position reaches the tele end, and performs electronic zoom on the camera body 2 side when the optical zoom position reaches the tele end.

In the present embodiment, the lens-side communication unit 34 transmits information indicating the operation detected by the detection unit 391 to the camera body 2 regardless of whether the received in-lens control is possible. This allows the body-side control unit 23 to determine whether it is necessary to set the power zoom ring flag and the power zoom lever flag to ON or OFF.

In addition, in the present embodiment, when the lens-side communication unit 34 receives the signal (power zoom ring flag and power zoom lever flag: OFF) for prohibiting the in-lens control, the lens-side communication unit 34 receives an instruction signal (power zoom command) for instructing varying the magnification of the imaging optical system 36 from the camera body 2, and the lens-side control unit 33 performs the out-of-lens control for controlling varying the magnification of the imaging optical system 36 based on the instruction signal (power zoom command) received by the lens-side communication unit 34. This makes it possible to realize the mixed type.

In addition, in the present embodiment, when the lens-side communication unit 34 receives the signal for prohibiting the in-lens control, the lens-side control unit 33 does not perform varying the magnification of the imaging optical system 36. This allows the body-side control unit 23 to control the entire camera system 1.

In addition, in the present embodiment, the lens-side operation unit 39 (the zoom ring 39a or the zoom lever 39b) can be operated in the tele direction and the wide direction opposite to the tele direction, and when the operation in the tele direction is further input after the imaging optical system 36 reaches the telephoto end by the operation in the tele direction, the lens-side communication unit 34 receives the signal for prohibiting the in-lens control. This makes it possible to realize the extended type in which electronic zoom is performed on the camera body 2 side.

In addition, in the present embodiment, the lens-side operation unit 39 includes the zoom ring 39a and the zoom lever 39b different from the zoom ring 39a, and the lens-side communication unit 34 repeatedly transmits the operation amount of the zoom ring 39a and the operation amount of the zoom lever 39b to the camera body 2. This allows the body-side control unit 23 to determine whether it is necessary to set the power zoom ring flag and the power zoom lever flag to ON or OFF.

In the present embodiment, the camera body 2 is capable of mounting the interchangeable lens 3 having the imaging optical system 36, and includes the body-side communication unit 24 that receives the operation information indicating the operation on the lens-side operation unit 39 included in the interchangeable lens 3, and the body-side communication unit 24 that transmits the information indicating whether or not the lens-side control unit 33 included in the interchangeable lens 3 can perform the in-lens control for controlling the imaging optical system 36 based on the operation of the lens-side operation unit 39 included in the interchangeable lens 3. This makes it possible to realize the extended type and the mixed type described above.

In the present embodiment, the camera body 2 includes the imaging element 27 having an imaging surface that captures the image of the imaging optical system 36, and the body-side control unit 23 that generates the image information based on the signal output from at least the partial region of the imaging surface. The body-side control unit 23 performs the electronic zoom control for changing the size of at least the partial region of the imaging surface based on an operation signal indicating an operation on the lens-side operation unit 39. This enables the user to execute the electronic zoom by operating the lens-side operation unit 39, thereby enhancing the convenience of the user.

In addition, in the present embodiment, when the body-side control unit 23 transmits the information for prohibiting the in-lens control to the interchangeable lens 3, the body-side control unit 23 controls the imaging optical system 36 based on the operation of the lens-side operation unit 39. This allows the body-side control unit 23 to control the entire camera system 1.

In addition, in the present embodiment, the body-side control unit 23 prohibits the in-lens control when the electronic zoom control is performed. This allows the body-side control unit 23 to control the entire camera system 1.

In addition, in the present embodiment, it is possible to set the camera body 2 to perform a mixed control(mixed type) in which the optical zoom control is performed while performing the electronic zoom control, and the body-side control unit 23 prohibits the in-lens control in a case where the mixed type is set. This allows the body-side control unit 23 to control the entire camera system 1 to realize the mixed type.

According to the present embodiment, the camera body 2 includes a plurality of types of operation members (body-side operation units 29) that can instruct the drive of the zoom lens 36a included in the interchangeable lens 3 by an operation, and the body-side control unit 23 that transmits the instruction to drive the zoom lens 36a to the interchangeable lens 3, and the camera body 2 makes the instruction different according to the operated operation member. This allows an appropriate instruction corresponding to the operated operation member to be transmitted to the interchangeable lens 3.

In addition, in the present embodiment, in a case where the operated body-side operation unit 29 is the zoom button 29c, the body-side control unit 23 transmits the zoom lens drive information including the drive speed of the zoom lens 36a, the drive direction (the tele direction or the wide direction) of the zoom lens 36a, and the drive start instruction of the zoom lens 36a to the lens-side control unit 33. This allows the user to drive the zoom lens 36a by operating the zoom button 29c.

In addition, in the present embodiment, in a case where the operated body-side operation unit 29 is, for example, the zoom lever 29b, the body-side control unit 23 transmits two pieces of information, that is, the depression amount of the zoom lever 29b and the zoom speed when the zoom lever 29b is operated, which is set in the camera body 2, to the lens-side control unit 33 as the zoom lens drive information. This allows the user to drive the zoom lens 36a by operating the zoom lever 29b.

In the present embodiment, in a case where the operated body-side operation unit 29 is a dial or a touch panel, the body-side control unit 23 periodically transmits information indicating the operation amount per unit time, that is, the operation speed of the operation member (dial or touch panel) to the lens-side control unit 33 as the zoom lens drive information. This allows the user to drive the zoom lens 36a by operating the dial or touch panel.

In the embodiment described above, in the case of the mixed type, when a first operation instructing to temporarily reduce the magnification of the image displayed on the display unit 28 is input, the body-side control unit 23 may increase the size of the region corresponding to the image displayed on the display unit 28 in the imaging element 27 to be larger than the size before the first operation is input while maintaining the magnification (focal length) of the imaging optical system 36, and when a second operation instructing to return the magnification of the image displayed on the display unit 28 to the original magnification is input, the body-side control unit 23 may return the size of the region corresponding to the image displayed on the display unit 28 in the imaging element 27 to the size before the first operation is input while maintaining the magnification of the imaging optical system 36. This point will be described.

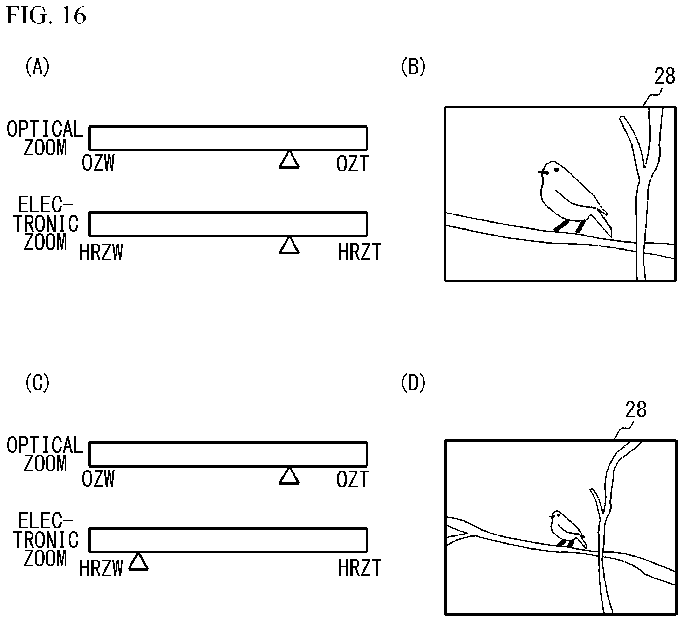

FIG. 16(A) is a diagram illustrating states of the optical zoom and the electronic zoom before the first operation is input, and FIG. 16(B) is a diagram illustrating an image displayed on the display unit 28 before the first operation is input. FIG. 16(C) is a diagram illustrating the states of the optical zoom and the electronic zoom after the first operation is input, and FIG. 16(D) is a diagram illustrating an image displayed on the display unit 28 after the first operation is input. The first operation is, for example, an operation of pressing a predetermined operation member of the camera body 2.

As illustrated in FIG. 16(A), before the first operation is input, the optical zoom position and the electronic zoom position are the same position. At this time, the image illustrated in FIG. 16(B) is displayed on the display unit 28.

Here, in the case in which the first operation is input, the body-side control unit 23 moves the electronic zoom position to the wide side while maintaining the optical zoom position, as illustrated in FIG. 16(C). Thus, as illustrated in FIG. 16(D), the range of the image displayed on the display unit 28 is enlarged. The extent to which the electronic zoom position is moved to the wide side when the first operation is input may be determined by default or may be set by the user. Further, for example, the electronic zoom position may be moved to the wide side in a stepwise manner according to the number of times of input of the first operation.

In a case where the second operation is input, the body-side control unit 23 returns the electronic zoom position to the position before the first operation is input while maintaining the optical zoom position. Accordingly, as illustrated in FIG. 16(A), the range of the image displayed on the display unit 28 is reduced. The second operation is, for example, an operation of pressing the predetermined operation member of the camera body 2. The predetermined operation member may be the same as or different from the operation member that receives the first operation.

Accordingly, for example, since the visible range (the range of the image displayed on the display unit 28) can be temporarily expanded only by pressing the predetermined operation member, re-capturing of the subject becomes easy.

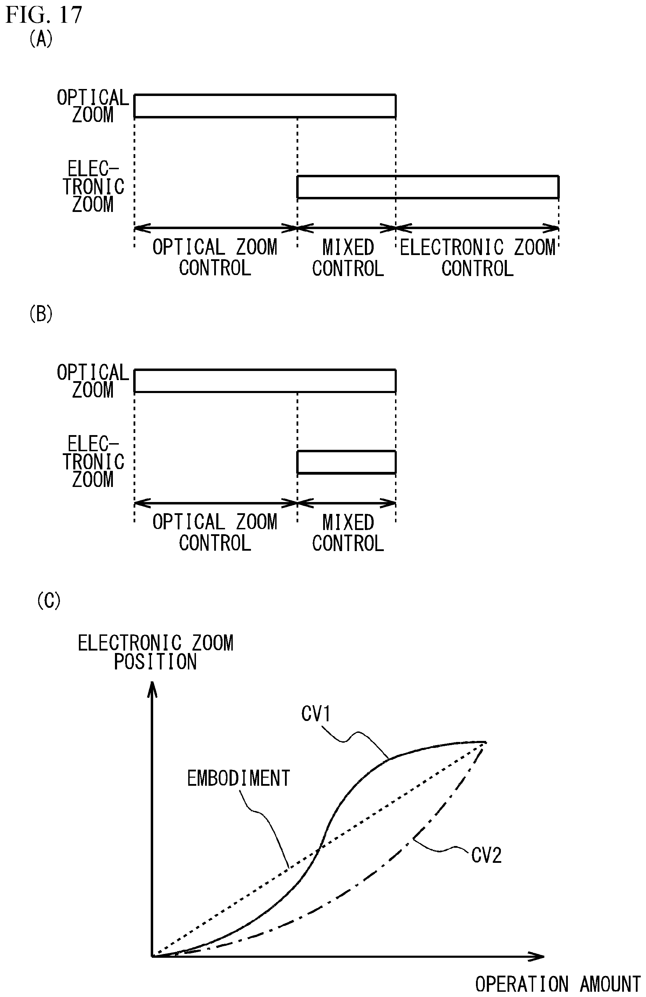

In the above embodiment, the body-side control unit 23 performs the mixed control in the entire variable magnification range of the imaging optical system 36, but the present disclosure is not limited thereto. For example, as illustrated in FIG. 17(A), the body-side control unit 23 may perform the optical zoom control, the mixed control, and the electronic zoom control in order, for example, when the zoom ring 39a is operated from the wide side to the tele side (in the case of variable magnification from the wide angle side to the tele side). As illustrated in FIG. 17(B), the mixed control may be performed in a part of the variable magnification range of the imaging optical system 36.

In the above embodiment, the electronic zoom position is changed at a constant rate with respect to the operation amount of the body-side operation unit 29 or the lens-side operation unit 39, but the present disclosure is not limited thereto. FIG. 17(C) is a diagram illustrating an example of a relationship between the operation amount of the body-side operation unit 29 or the lens-side operation unit 39 and the electronic zoom position. In the embodiment described above, as indicated by a dotted line in FIG. 17(C), the body-side control unit 23 changes the electronic zoom position at the constant rate with respect to the operation amount of the body-side operation unit 29 or the lens-side operation unit 39, but, for example, as indicated by a curve CV1 and a curve CV2, the rate of change of the electronic zoom position with respect to the operation amount of the body-side operation unit 29 or the lens-side operation unit 39 may be biased. For example, since the drive speed of the zoom lens 36a may be slow when the zoom lens 36a starts to move, the rate of change of the electronic zoom position may be increased when the zoom lens 36a starts to move, to compensate for the slow drive speed of the zoom lens 36a.

In the above embodiment, in the mixed type (mixed control), the body-side control unit 23 performs both the electronic zoom control and the optical zoom control, but the present disclosure is not limited thereto. For example, the lens-side control unit 33 may perform the optical zoom control, and the body-side control unit 23 may perform the electronic zoom control in parallel with the optical zoom control of the lens-side control unit 33. In this case, the body-side control unit 23 may control the electronic zoom based on the operation amount of the lens-side operation unit 39 or the body-side operation unit 29, or may control the electronic zoom based on the control focal length transmitted from the lens-side control unit 33 when the interchangeable lens 3 cannot detect the operation amount of the lens-side operation unit 39.

The above-described embodiments are preferred examples. However, the present disclosure is not limited to this, and various modifications can be made without departing from the scope of the claimed invention, and any constituent elements may be combined.

### [Description of Reference]

1 camera system
2 camera body
3 interchangeable lens
23 body-side control unit
24 body-side communication unit
24a body side first communication unit
24b body side second communication unit
27 imaging element
28 display unit
29 body-side operation unit
34 lens-side communication unit
34a lens-side first communication unit
34b lens-side second communication unit
36 imaging optical system
36a zoom lens
36b focus lens
37 first drive unit
39 lens-side operation unit
OA optical axis

## Claims

1. An interchangeable lens mountable on a camera body, comprising:
a variable magnification optical system capable of varying magnification;
an operation member configured to receive an operation for instructing varying the magnification of the variable magnification optical system from a user;
a detection unit configured to detect the operation received by the operation member;
a transmission unit configured to transmit information indicating the operation detected by the detection unit to the camera body;
a control unit configured to perform in-lens control for controlling varying the magnification of the variable magnification optical system based on the information indicating the operation detected by the detection unit; and
a reception unit configured to receive a signal indicating executability of the in-lens control from the camera body.

2. The interchangeable lens according to claim 1,
wherein the transmission unit transmits the information indicating the operation detected by the detection unit to the camera body regardless of the executability of the in-lens control received by the reception unit.

3. The interchangeable lens according to claim 1 or 2,
wherein the reception unit receives an instruction signal for instructing varying the magnification of the variable magnification optical system from the camera body when a signal for prohibiting the in-lens control is received, and
wherein the control unit performs out-of-lens control for controlling varying the magnification of the variable magnification optical system based on the instruction signal received by the reception unit.

4. The interchangeable lens according to claim 1 or 2,
wherein when the reception unit receives a signal for prohibiting the in-lens control, the control unit does not perform varying the magnification of the variable magnification optical system.

5. The interchangeable lens according to any of claims 1 to 4,
wherein the operation member is operable in a first direction and a second direction opposite to the first direction, and
wherein when the operation in the first direction is further input after the variable magnification optical system reaches a telephoto end by the operation in the first direction, the reception unit receives a signal for prohibiting the in-lens control.

6. The interchangeable lens according to any of claims 1 to 5,
wherein the operation member includes a first operation member and a second operation member different from the first operation member, and
wherein the transmission unit repeatedly transmits an operation amount of the first operation member and an operation amount of the second operation member to the camera body.

7. A camera body mountable on an interchangeable lens having a variable magnification optical system, the camera body comprising:
a reception unit configured to receive an operation signal indicating an operation on an operation member included in the interchangeable lens; and
a transmission unit configured to transmit information indicating whether or not in-lens control in which a first control unit included in the interchangeable lens controls the variable magnification optical system based on the operation of the operation member included in the interchangeable lens is possible.

8. The camera body according to claim 7, further comprising:
an imaging unit having an imaging surface configured to capture an image of the variable magnification optical system;
a generation unit configured to generate image information based on a signal output from at least a partial region of the imaging surface; and
a second control unit configured to perform electronic variable magnification control for changing a size of the at least the partial region of the imaging surface based on the operation signal.

9. The camera body according to claim 7 or 8,
wherein the reception unit receives information indicating a focal length of the interchangeable lens, and
wherein the information indicating whether or not the in-lens control is possible is determined based on the information indicating the focal length and the operation signal.

10. The camera body according to claim 8,
wherein the second control unit controls the variable magnification optical system based on the operation of the operation member included in the interchangeable lens when information for prohibiting the in-lens control is transmitted to the interchangeable lens.

11. The camera body according to claim 8,
wherein the second control unit prohibits the in-lens control when the electronic variable magnification control is performed.

12. The camera body according to claim 8, 10 or 11, further comprising
a setting unit capable of setting performance of mixed control to perform optical variable magnification control of varying the magnification of the variable magnification optical system while performing the electronic variable magnification control,
wherein the second control unit prohibits the in-lens control when the performance of the mixed control is set in the setting unit.
